# EUROPEAN PATENT APPLICATION

(11) **EP 4 518 445 A1**
(43) Date of publication of application: **05.03.2025**
(21) Application number: 23795272.6
(22) Date of filing: 23.04.2023
(51) Int. Cl.: H04W 52/02

(54) **INFORMATION PROCESSING METHOD, APPARATUS, NETWORK DEVICE AND TERMINAL**

(30) Priority: 28.04.2022 CN 202210471015
(71) Applicant: Datang Mobile Communications Equipment Co., Ltd., Beijing 100085 (CN)
(72) Inventor: WANG, Jiaqing, Beijing 100085 (CN); LI, Hui, Beijing 100085 (CN); YANG, Meiying, Beijing 100085 (CN)
(74) Representative: Studio Torta S.p.A.
(86) International application number: PCT/CN2023/090054
(87) International publication number: WO 2023/207839

(57) **Abstract**

Provided in the present disclosure are an information processing method, an apparatus, a network device and a terminal. The information processing method comprises: determining indication information related to an antenna; and by using dynamic signaling, transmitting to a terminal the indication information, the indication information being used for power saving of a network device.

## Description

### CROSS-REFERENCE TO RELATED APPLICATION

This application claims the priority of Chinese Patent Application No. 202210471015.0 filed in China on April 28, 2022, the disclosure of which is hereby incorporated by reference in its entirety.

### TECHNICAL FIELD

The present disclosure relates to the field of communications technologies, and in particular, to an information processing method, an information processing apparatus, a network device, and a terminal.

### BACKGROUND

Compared with 4G mobile communication, a New Radio (NR) system needs to support a high-frequency band, a large bandwidth, and a large-scale antenna technology, and when the system performance is improved, the power consumption of the 5G base station is improved to 2-3 times that of the 4G base station. The energy consumption is the main index of Operating Expense (OPEX) of an Operating Provider, and the operating cost of energy consumption in the mobile network accounts for about 23% of the total operating cost according to the operator's data, which becomes a heavy burden of widely deployed 5G networks, and the energy consumption problem also limits its application in the vertical industry field and the large-scale popularization of 5G terminals. According to an actual measurement result, most of the energy consumption of the base station comes from a radio access network, especially an active antenna unit (AAU) part of a large-scale antenna array, and the AAU at least includes a radio frequency and an antenna.

At present, for the above problems, a solution for turning off a base station in a time domain is provided, but there are defects that service continuity cannot be ensured, a user experience is poor, static power consumption of a channel still exists, and an optimal energy-saving effect cannot be achieved.

It can be seen from the above that there are defects that service continuity cannot be guaranteed, user experience is poor, and an optimal energy-saving effect cannot be achieved in an energy-saving information processing scheme in the related art.

### SUMMARY

An objective of the present disclosure is to provide an information processing method and an information processing method apparatus, a network device, and a terminal, so as to solve the problem in the related art that service continuity cannot be ensured, a user experience is poor, and an optimal energy-saving effect cannot be achieved in an energy-saving information processing solution.

To address the above technical problem, an information processing method applied to a network device is provided. The method includes: determining indication information related to one or more antennas; transmitting the indication information to a terminal by using dynamic signaling; wherein the indication information is used for energy-saving of the network device.

Optionally, the indication information is antenna port indication information of a reference signal.

Optionally, a resource corresponding to the antenna port indication information is determined according to first predefined information or network device configuration.

Optionally, the antenna port indication information is configured to indicate at least one of port activation information and port deactivation information.

Optionally, transmitting the indication information to the terminal by using the dynamic signaling includes at least one of following: transmitting the antenna port indication information to the terminal by using terminal-specific dynamic signaling; and transmitting the antenna port indication information to the terminal by using group common dynamic signaling.

Optionally, the antenna port indication information is bitmap indication information; an indication granularity of the bitmap indication information is one antenna port or one group of antenna ports.

Optionally, there is a first correspondence between the antenna port indication information and each antenna port, and the first correspondence is predefined, or is configured and indicated to the terminal by the network device.

Optionally, transmitting the indication information to the terminal by using the dynamic signaling includes: transmitting a first set of antenna port indication information to the terminal; transmitting a first index to the terminal by using the dynamic signaling; wherein the first index is configured to indicate antenna port indication information as target indication information in the first set.

Optionally, when transmitting the first set of antenna port indication information to the terminal, the method further includes: transmitting, to a terminal, resource identification information related to the reference signal and corresponding to the first set.

Optionally, the resource identification information is implicitly indicated by location information of a resource related to the reference signal in a signaling configuration.

Optionally, determining the indication information related to the one or more antennas includes: receiving first information from a terminal; determining the antenna port indication information of the reference signal according to the first information; wherein the first information includes at least one of following: channel state information (CSI), and preference information related to an antenna port of the reference signal; the CSI is measurement reporting information for a target resource.

Optionally, the preference information includes: preferred antenna port configuration information of a channel state information-reference signal (CSI-RS).

Optionally, the CSI includes CSI corresponding to different antenna ports.

Optionally, there is an association relationship among the antenna port indication information corresponding to different bandwidth parts (BWPs).

Optionally, the association relationship includes that at least part of contents is same.

Optionally, the indication information is resource identification information of a reference signal.

Optionally, transmitting the indication information to the terminal by using the dynamic signaling includes: transmitting a second set of the resource identification information to the terminal; and transmitting a second index to the terminal by using the dynamic signaling; wherein the second index is configured to indicate the resource identification information as target identification information in the second set.

Optionally, the indication information is transmission power information of a reference signal.

Optionally, determining the indication information related to the one or more antennas includes: receiving preferred power backoff information from the terminal; determining the transmission power information of the reference signal according to the preferred power backoff information.

Optionally, the reference signal is a channel state information reference signal (CSI-RS).

Optionally, a resource corresponding to the CSI-RS is: at least one CSI-RS resource in CSI resource configuration CSI-ResourceConfig associated with a CSI report configuration CSI-ReportConfig.

An information processing method applied to a terminal is provided. The method includes: receiving indication information related to one or more antennas from a network device through dynamic signaling; determining state information related to the one or more antennas according to the indication information.

Optionally, the indication information is antenna port indication information of a reference signal; determining the state information related to the one or more antennas according to the indication information includes: determining the state information of the antenna port of the reference signal according to the antenna port indication information of the reference signal.

Optionally, the resource corresponding to the antenna port indication information is determined according to first predefined information or network device configuration.

Optionally, the antenna port indication information is configured to indicate at least one of port activation information and port deactivation information.

Optionally, receiving the indication information related to the one or more antennas from the network device through the dynamic signaling includes at least one of following: receiving the antenna port indication information from the network device by using terminal-specific dynamic signaling; receiving the antenna port indication information from the network device by using group common dynamic signaling.

Optionally, the antenna port indication information is bitmap indication information; an indication granularity of the bitmap indication information is one antenna port or one group of antenna ports; determining the state information of the antenna port of the reference signal according to the antenna port indication information of the reference signal includes: determining the state information of one antenna port or a group of antenna ports of the reference signal according to the bitmap indication information.

Optionally, there is a first correspondence between the antenna port indication information and each antenna port, and the first correspondence is predefined, or is configured and indicated by the network device; determining the state information of the one antenna port or the group of antenna ports of the reference signal according to the bitmap indication information includes: determining the state information of the one antenna port or the group of antenna ports of the reference signal according to the bitmap indication information and the first correspondence.

Optionally, the receiving the indication information related to the one or more antennas from the network device through the dynamic signaling includes: receiving a first set of antenna port indication information from the network device; receiving a first index from the network device by using the dynamic signaling; obtaining antenna port indication information as target indication information according to the first set and the first index; wherein the first index is configured to indicate the antenna port indication information as the target indication information in the first set.

Optionally, when receiving the first set of the antenna port indication information from the network device, the method further includes: receiving, from the network device, resource identification information related to the reference signal and corresponding to the first set; obtaining the antenna port indication information as the target indication information according to the first set and the first index includes: obtaining the antenna port indication information as the target indication information according to the first set, the first index, and the resource identification information.

Optionally, the resource identification information is implicitly indicated by location information of a resource related to the reference signal in a signaling configuration.

Optionally, before receiving the indication information related to the one or more antennas from the network device through the dynamic signaling, the method further includes: transmitting first information to the network device; wherein the first information includes at least one of following: channel state information (CSI), and preference information related to an antenna port of the reference signal; the CSI is measurement reporting information for a target resource.

Optionally, the preference information includes: preferred antenna port configuration information of a channel state information-reference signal (CSI-RS).

Optionally, the CSI includes CSI corresponding to different antenna ports.

Optionally, there is an association relationship among the antenna port indication information corresponding to different bandwidth parts (BWPs).

Optionally, the association relationship includes that at least part of contents is same.

Optionally, the indication information is resource identification information of a reference signal; determining the state information related to the one or more antennas according to the indication information includes: determining the state information of a corresponding resource of the reference signal according to the resource identification information.

Optionally, receiving the indication information related to the one or more antennas from the network device through the dynamic signaling includes: receiving a second set of the resource identification information from the network device through the dynamic signaling; receiving a second index from the network device through the dynamic signaling; obtaining the resource identification information as target identification information according to the second set and the second index; wherein the second index is configured to indicate the resource identification information as target identification information in the second set.

Optionally, the indication information is transmission power information of a reference signal; determining the state information related to the one or more antennas according to the indication information includes: determining a transmission power of a corresponding resource of the reference signal according to the transmission power information.

Optionally, before receiving the indication information related to the one or more antennas from the network device through the dynamic signaling, the method further includes: transmitting preferred power backoff information of the terminal to the network device.

Optionally, after receiving the indication information related to the one or more antennas from the network device through the dynamic signaling, the method further includes: not receiving a resource which is indicated as an unavailable resource or a muting resource by the indication information.

Optionally, the reference signal is a channel state information reference signal (CSI-RS).

Optionally, a resource corresponding to the CSI-RS is: at least one CSI-RS resource in CSI resource configuration CSI-ResourceConfig associated with a CSI report configuration CSI-ReportConfig.

Optionally, the state information related to the one or more antennas includes at least one of activation state information or deactivation state information of the antenna port, activation state information or deactivation state information of a corresponding resource of the reference signal, and a transmission power of a corresponding resource of the reference signal.

A network device is provided. The network device includes: a memory, a transceiver, and a processor, wherein the memory is configured to store a computer program; the transceiver is configured to transmit and receive data under the control of the processor; and the processor is configured to read the computer program in the memory and execute following operations, the operations includes determining indication information related to one or more antennas; transmitting the indication information to a terminal by using dynamic signaling through the transceiver; wherein the indication information is used for energy-saving of the network device.

Optionally, the indication information is antenna port indication information of a reference signal.

Optionally, a resource corresponding to the antenna port indication information is determined according to first predefined information or network device configuration.

Optionally, the antenna port indication information is configured to indicate at least one of port activation information and port deactivation information.

Optionally, transmitting the indication information to the terminal by using the dynamic signaling includes at least one of following: transmitting the antenna port indication information to the terminal by using terminal-specific dynamic signaling; and transmitting the antenna port indication information to the terminal by using group common dynamic signaling.

Optionally, the antenna port indication information is bitmap indication information; an indication granularity of the bitmap indication information is one antenna port or one group of antenna ports.

Optionally, there is a first correspondence between the antenna port indication information and each antenna port, and the first correspondence is predefined, or is configured and indicated to the terminal by the network device.

Optionally, transmitting the indication information to the terminal by using the dynamic signaling includes: transmitting a first set of antenna port indication information to the terminal; transmitting a first index to the terminal by using the dynamic signaling; wherein the first index is configured to indicate antenna port indication information as target indication information in the first set.

Optionally, when transmitting the first set of antenna port indication information to the terminal, the operations further include: transmitting, through the transceiver to a terminal, resource identification information related to the reference signal and corresponding to the first set.

Optionally, the resource identification information is implicitly indicated by location information of a resource related to the reference signal in a signaling configuration.

Optionally, determining the indication information related to the one or more antennas includes: receiving first information through the transceiver from a terminal; determining the antenna port indication information of the reference signal according to the first information; wherein the first information includes at least one of following: channel state information (CSI), and preference information related to an antenna port of the reference signal; the CSI is measurement reporting information for a target resource.

Optionally, the preference information includes: preferred antenna port configuration information of a channel state information-reference signal (CSI-RS).

Optionally, the CSI includes CSI corresponding to different antenna ports.

Optionally, there is an association relationship among the antenna port indication information corresponding to different bandwidth parts (BWPs).

Optionally, the association relationship includes that at least part of contents is same.

Optionally, the indication information is resource identification information of a reference signal.

Optionally, transmitting the indication information to the terminal by using the dynamic signaling includes: transmitting a second set of the resource identification information to the terminal; and transmitting a second index to the terminal by using the dynamic signaling; wherein the second index is configured to indicate the resource identification information as target identification information in the second set.

Optionally, the indication information is transmission power information of a reference signal.

Optionally, determining the indication information related to the one or more antennas includes: receiving preferred power backoff information through the transceiver from the terminal; determining the transmission power information of the reference signal according to the preferred power backoff information.

Optionally, the reference signal is a channel state information reference signal (CSI-RS).

Optionally, a resource corresponding to the CSI-RS is: at least one CSI-RS resource in CSI resource configuration CSI-ResourceConfig associated with a CSI report configuration CSI-ReportConfig.

A terminal is provided. The terminal includes: a memory, a transceiver, and a processor, wherein the memory is configured to store a computer program; the transceiver is configured to transmit and receive data under the control of the processor; and the processor is configured to read the computer program in the memory and execute following operations: receiving indication information related to one or more antennas from a network device through dynamic signaling by using a transceiver; determining state information related to the one or more antennas according to the indication information.

Optionally, the indication information is antenna port indication information of a reference signal; determining the state information related to the one or more antennas according to the indication information includes: determining the state information of the antenna port of the reference signal according to the antenna port indication information of the reference signal.

Optionally, the resource corresponding to the antenna port indication information is determined according to first predefined information or network device configuration.

Optionally, the antenna port indication information is configured to indicate at least one of port activation information and port deactivation information.

Optionally, receiving the indication information related to the one or more antennas from the network device through the dynamic signaling includes at least one of following: receiving the antenna port indication information from the network device by using terminal-specific dynamic signaling; receiving the antenna port indication information from the network device by using group common dynamic signaling.

Optionally, the antenna port indication information is bitmap indication information; an indication granularity of the bitmap indication information is one antenna port or one group of antenna ports; determining the state information of the antenna port of the reference signal according to the antenna port indication information of the reference signal includes: determining the state information of one antenna port or a group of antenna ports of the reference signal according to the bitmap indication information.

Optionally, there is a first correspondence between the antenna port indication information and each antenna port, and the first correspondence is predefined, or is configured and indicated by the network device; determining the state information of the one antenna port or the group of antenna ports of the reference signal according to the bitmap indication information includes: determining the state information of the one antenna port or the group of antenna ports of the reference signal according to the bitmap indication information and the first correspondence.

Optionally, the receiving the indication information related to the one or more antennas from the network device through the dynamic signaling includes: receiving a first set of antenna port indication information from the network device; receiving a first index from the network device by using the dynamic signaling; obtaining antenna port indication information as target indication information according to the first set and the first index; wherein the first index is configured to indicate the antenna port indication information as the target indication information in the first set.

Optionally, when receiving the first set of the antenna port indication information from the network device, the operations further include: receiving, from the network device, resource identification information related to the reference signal and corresponding to the first set through the transceiver; obtaining the antenna port indication information as the target indication information according to the first set and the first index includes: obtaining the antenna port indication information as the target indication information according to the first set, the first index, and the resource identification information.

Optionally, the resource identification information is implicitly indicated by location information of a resource related to the reference signal in a signaling configuration.

Optionally, before receiving the indication information related to the one or more antennas from the network device through the dynamic signaling, the operations further include: transmitting first information to the network device through the transceiver; wherein the first information includes at least one of following: channel state information (CSI), and preference information related to an antenna port of the reference signal; the CSI is measurement reporting information for a target resource.

Optionally, the preference information includes: preferred antenna port configuration information of a channel state information-reference signal (CSI-RS).

Optionally, the CSI includes CSI corresponding to different antenna ports.

Optionally, there is an association relationship among the antenna port indication information corresponding to different bandwidth parts (BWPs).

Optionally, the association relationship includes that at least part of contents is same.

Optionally, the indication information is resource identification information of a reference signal; determining the state information related to the one or more antennas according to the indication information includes: determining the state information of a corresponding resource of the reference signal according to the resource identification information.

Optionally, receiving the indication information related to the one or more antennas from the network device through the dynamic signaling includes: receiving a second set of the resource identification information from the network device through the dynamic signaling; receiving a second index from the network device through the dynamic signaling; obtaining the resource identification information as target identification information according to the second set and the second index; wherein the second index is configured to indicate the resource identification information as target identification information in the second set.

Optionally, the indication information is transmission power information of a reference signal; determining the state information related to the one or more antennas according to the indication information includes: determining a transmission power of a corresponding resource of the reference signal according to the transmission power information.

Optionally, before receiving the indication information related to the one or more antennas from the network device through the dynamic signaling, the operations further include: transmitting preferred power backoff information of the terminal to the network device through the transceiver.

Optionally, after receiving the indication information related to the one or more antennas from the network device through the dynamic signaling, the operations further include: not receiving a resource which is indicated as an unavailable resource or a muting resource by the indication information.

Optionally, the reference signal is a channel state information reference signal (CSI-RS).

Optionally, a resource corresponding to the CSI-RS is: at least one CSI-RS resource in CSI resource configuration CSI-ResourceConfig associated with a CSI report configuration CSI-ReportConfig.

Optionally, the state information related to the one or more antennas includes at least one of activation state information or deactivation state information of the antenna port, activation state information or deactivation state information of a corresponding resource of the reference signal, and a transmission power of a corresponding resource of the reference signal.

An information processing apparatus applied to a network device is provided. The apparatus includes: a first determining unit, configured to determine indication information related to one or more antennas; a first transmitting unit, configured to transmit the indication information to a terminal by using dynamic signaling; wherein the indication information is used for energy-saving of the network device.

Optionally, the indication information is antenna port indication information of a reference signal.

Optionally, a resource corresponding to the antenna port indication information is determined according to first predefined information or network device configuration.

Optionally, the antenna port indication information is configured to indicate at least one of port activation information and port deactivation information.

Optionally, transmitting the indication information to the terminal through the dynamic signaling includes at least one of following: transmitting the antenna port indication information to the terminal by using terminal-specific dynamic signaling; transmitting the antenna port indication information to the terminal by using group common dynamic signaling.

Optionally, the antenna port indication information is bitmap indication information; an indication granularity of the bitmap indication information is one antenna port or one group of antenna ports.

Optionally, there is a first correspondence between the antenna port indication information and each antenna port, and the first correspondence is predefined, or is configured and indicated to the terminal by the network device.

Optionally, transmitting the indication information to the terminal through the dynamic signaling includes: transmitting a first set of antenna port indication information to the terminal; transmitting a first index to the terminal by using the dynamic signaling; wherein the first index is configured to indicate antenna port indication information as target indication information in the first set.

Optionally, the apparatus further includes: a second transmitting unit, configured to transmit, to the terminal, resource identification information related to the reference signal and corresponding to the first set.

Optionally, the resource identification information is implicitly indicated by location information of a resource related to the reference signal in a signaling configuration.

Optionally, determining the indication information related to the one or more antennas includes: receiving first information from a terminal; determining the antenna port indication information of the reference signal according to the first information; wherein the first information includes at least one of following: channel state information (CSI), and preference information related to an antenna port of the reference signal; the CSI is measurement reporting information for a target resource.

Optionally, the preference information includes: preferred antenna port configuration information of a channel state information-reference signal (CSI-RS).

Optionally, the CSI includes CSI corresponding to different antenna ports.

Optionally, there is an association relationship among the antenna port indication information corresponding to different bandwidth parts (BWPs).

Optionally, the association relationship includes that at least part of contents is same.

Optionally, the indication information is resource identification information of a reference signal.

Optionally, transmitting the indication information to the terminal through the dynamic signaling includes: transmitting a second set of the resource identification information to the terminal; and transmitting a second index to the terminal by using the dynamic signaling; wherein the second index is configured to indicate the resource identification information as target identification information in the second set.

Optionally, the indication information is transmission power information of a reference signal.

Optionally, determining the indication information related to the one or more antennas includes receiving preferred power backoff information from the terminal; determining the transmission power information of the reference signal according to the preferred power backoff information.

Optionally, the reference signal is a channel state information reference signal (CSI-RS).

Optionally, a resource corresponding to the CSI-RS is: at least one CSI-RS resource in CSI resource configuration CSI-ResourceConfig associated with a CSI report configuration CSI-ReportConfig.

An information processing apparatus applied to a terminal is provided. The information processing apparatus includes: a first receiving unit, configured to receive indication information related to one or more antennas from a network device through dynamic signaling; and a second determining unit, configured to determine state information related to the one or more antennas according to the indication information.

Optionally, the indication information is antenna port indication information of a reference signal; determining the state information related to the one or more antennas according to the indication information includes: determining the state information of the antenna port of the reference signal according to the antenna port indication information of the reference signal.

Optionally, the resource corresponding to the antenna port indication information is determined according to first predefined information or network device configuration.

Optionally, the antenna port indication information is configured to indicate at least one of port activation information and port deactivation information.

Optionally, receiving the indication information related to the one or more antennas from the network device through the dynamic signaling includes at least one of following: receiving the antenna port indication information from the network device by using terminal-specific dynamic signaling; receiving the antenna port indication information from the network device by using group common dynamic signaling.

Optionally, the antenna port indication information is bitmap indication information; an indication granularity of the bitmap indication information is one antenna port or one group of antenna ports; determining the state information of the antenna port of the reference signal according to the antenna port indication information of the reference signal includes: determining the state information of one antenna port or a group of antenna ports of the reference signal according to the bitmap indication information.

Optionally, there is a first correspondence between the antenna port indication information and each antenna port, and the first correspondence is predefined, or is configured and indicated by the network device; determining the state information of the one antenna port or the group of antenna ports of the reference signal according to the bitmap indication information includes: determining the state information of the one antenna port or the group of antenna ports of the reference signal according to the bitmap indication information and the first correspondence.

Optionally, the receiving the indication information related to the one or more antennas from the network device through the dynamic signaling includes: receiving a first set of antenna port indication information from the network device; receiving a first index from the network device by using the dynamic signaling; obtaining antenna port indication information as target indication information according to the first set and the first index; wherein the first index is configured to indicate the antenna port indication information as the target indication information in the first set.

Optionally, the apparatus further includes: a second receiving unit, configured for, when receiving the first set of the antenna port indication information from the network device, receiving, from the network device, resource identification information related to the reference signal and corresponding to the first set; obtaining the antenna port indication information as the target indication information according to the first set and the first index includes: obtaining the antenna port indication information as the target indication information according to the first set, the first index, and the resource identification information.

Optionally, the resource identification information is implicitly indicated by location information of a resource related to the reference signal in a signaling configuration.

Optionally, the apparatus further includes: a third transmitting unit, configured for, before receiving the indication information related to the one or more antennas from the network device through the dynamic signaling, transmitting first information to the network device; wherein the first information includes at least one of following: channel state information (CSI), and preference information related to an antenna port of the reference signal; the CSI is measurement reporting information for a target resource.

Optionally, the preference information includes: preferred antenna port configuration information of a channel state information-reference signal (CSI-RS).

Optionally, the CSI includes CSI corresponding to different antenna ports.

Optionally, there is an association relationship among the antenna port indication information corresponding to different bandwidth parts (BWPs).

Optionally, the association relationship includes that at least part of contents is same.

Optionally, the indication information is resource identification information of a reference signal; determining the state information related to the one or more antennas according to the indication information includes: determining the state information of a corresponding resource of the reference signal according to the resource identification information.

Optionally, receiving the indication information related to the one or more antennas from the network device through the dynamic signaling includes: receiving a second set of the resource identification information from the network device through the dynamic signaling; receiving a second index from the network device through the dynamic signaling; obtaining the resource identification information as target identification information according to the second set and the second index; wherein the second index is configured to indicate the resource identification information as target identification information in the second set.

Optionally, the indication information is transmission power information of a reference signal; determining the state information related to the one or more antennas according to the indication information includes: determining a transmission power of a corresponding resource of the reference signal according to the transmission power information.

Optionally, the apparatus further includes a fourth transmitting unit, configured for, before receiving the indication information related to the one or more antennas from the network device through the dynamic signaling, transmitting preferred power backoff information of the terminal to the network device.

Optionally, the apparatus further includes a first processing unit, configured for, after receiving the indication information related to the one or more antennas from the network device through the dynamic signaling, not receiving a resource which is indicated as an unavailable resource or a muting resource by the indication information.

Optionally, the reference signal is a channel state information reference signal (CSI-RS).

Optionally, a resource corresponding to the CSI-RS is: at least one CSI-RS resource in CSI resource configuration CSI-ResourceConfig associated with a CSI report configuration CSI-ReportConfig.

Optionally, the state information related to the one or more antennas includes at least one of activation state information or deactivation state information of the antenna port, activation state information or deactivation state information of a corresponding resource of the reference signal, and a transmission power of a corresponding resource of the reference signal.

A processor-readable storage medium is provided., wherein the processor-readable storage medium stores a computer program, and the computer program is configured to cause a processor to execute the information processing method applied to the network side device, or the processor-readable storage medium stores a computer program, and the computer program is configured to cause a processor to execute the information processing method applied to the terminal side.

The above technical solution of the present disclosure has the following beneficial effects:

In the foregoing solution, the information processing method determines the indication information related to the one or more antennas; and transmits the indication information to the terminal by using dynamic signaling; wherein the indication information is used for energy-saving of the network device; so that the base station can perform scheduling according to the latest reported information of the terminal, avoid affecting the continuity of the transmission service and avoid the increased delay, and achieve matching of the service load and the actual transmission environment. On the premise that better service is provided for the terminal, the energy consumption of the network (for example, the base station) is better reduced; the problem that the service continuity cannot be ensured, the user experience is poor, and the optimal energy-saving effect cannot be achieved in the related art is well solved.

### BRIEF DESCRIPTION OF THE DRAWINGS

FIG. 1 is a schematic architectural diagram of a wireless communication system according to an embodiment of the present disclosure;
FIG. 2 is a schematic diagram of turning off an antenna channel according to an embodiment of the present disclosure;
FIG. 3 is a first schematic flowchart of an information processing method according to an embodiment of the present disclosure;
FIG. 4 is a second schematic flowchart of an information processing method according to an embodiment of the present disclosure;
FIG. 5 is a first schematic diagram of an antenna port according to an embodiment of the present disclosure;
FIG. 6 is a second schematic diagram of an antenna port according to an embodiment of the present disclosure;
FIG. 7 is a third schematic diagram of an antenna port according to an embodiment of the present disclosure;
FIG. 8 is a schematic diagram of a muting indication of a resource identifier and an antenna port according to an embodiment of the present disclosure;
FIG. 9 is a schematic structural diagram of a network device according to an embodiment of the present disclosure;
FIG. 10 is a schematic structural diagram of a terminal according to an embodiment of the present disclosure;
FIG. 11 is a first schematic structural diagram of an information processing apparatus according to an embodiment of the present disclosure;
FIG. 12 is a second schematic structural diagram of an information processing apparatus according to an embodiment of the present disclosure.

### DETAILED DESCRIPTION

The technical solutions in the embodiments of the present disclosure will be clearly and completely described below with reference to the accompanying drawings in the embodiments of the present disclosure. All other embodiments obtained by a person of ordinary skill in the art based on the embodiments of the present disclosure without creative efforts shall fall within the protection scope of the present disclosure.

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects.

In the embodiments of the present disclosure, the term "a plurality of" means two or more, and other quantifiers are similar.

The technical solutions provided in the embodiments of the present disclosure may be applied to various systems, especially 5G systems. For example, the applicable system may be a global system of mobile communication (GSM) system, a code division multiple access (CDMA) system, a wideband code division multiple access (WCDMA) general packet radio service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), A Worldwide Interoperability for Microwave Access (Worldwide Interoperability for Microwave Access) system, a 5G New Radio (NR) system, and the like. The plurality of systems each include a terminal device and a network device. The system may further include a core network part, such as an Evolved Packet System (EPS), a 5G system (5 GS), and the like.

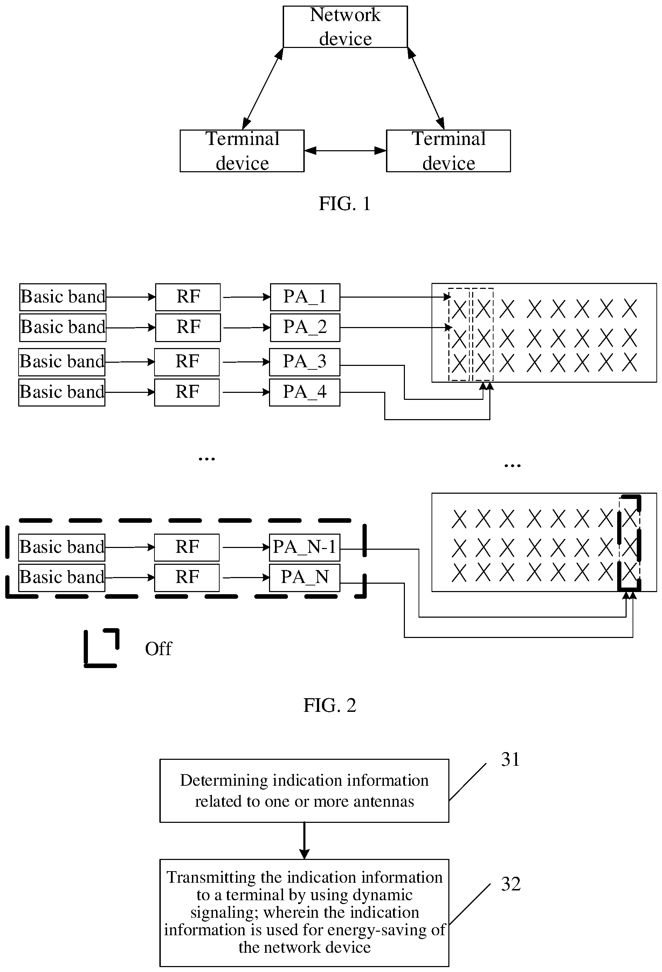

FIG. 1 is a block diagram of a wireless communication system to which an embodiment of the present disclosure may be applied. The wireless communication system includes a terminal device (also referred to as a terminal for short) and a network device.

The terminal device in the embodiments of the present disclosure may be a device that provides voice and/or data connectivity to a user, a handheld device having a wireless connection function, or another processing device connected to a wireless modem. In different systems, the name of the terminal device may be different, for example, in a 5G system, the terminal device may be referred to as user equipment (UE). The wireless terminal device may communicate with one or more core networks (CN) via a radio access network (RAN), and the wireless terminal device may be a mobile terminal device, such as a mobile phone (or referred to as a "cellular" phone) and a computer having a mobile terminal device, for example, may be a portable, pocket-sized, handheld, computer built-in or vehicle-mounted mobile device, which exchanges language and/or data with a radio access network. For example, devices such as a Personal Communication Service (PCS) phone, a cordless phone, a Session Initiated Protocol (SIP) phone, a Wireless Local Loop (WLL) station, and a personal digital assistant (PDA). The wireless terminal device may also be referred to as a system, a subscriber unit, a subscriber station, a mobile station, a mobile station, a remote station, an access point, a remote terminal, an access terminal, a user terminal, a user agent, and a user device, which are not limited in the embodiments of the present disclosure.

The network device in this embodiment of the present disclosure may be a base station, and the base station may include a plurality of cells that provide a service for the terminal. Depending on the specific application scenario, the base station may also be referred to as an access point, or may be a device in the access network that communicates with the wireless terminal device through one or more sectors on the air interface, or another name. The network device may be configured to replace the received over-the-air frame with an Internet Protocol (IP) packet as a router between the wireless terminal device and the rest of the access network, where the rest of the access network may include an Internet Protocol (IP) communication network. The network device may also coordinate attribute management of the air interface. For example, the network device in the embodiments of the present disclosure may be a Base Transceiver Station (BTS) in a Global System for Mobile Communications (GSM) or a Code Division Multiple Access (Code Division Multiple Access, CDMA), or may be a network device in a Wide-Band Code Division Multiple Access (WCDMA). The embodiment of the present disclosure is not limited in the embodiments of the present disclosure, but may also be an evolved network device in a Long Term Evolution (LTE) system, a 5G base station in a 5G Network Architecture (Next Generation System), a Home Evolved Node B, a Relay Node, a Femto, a Pico Base Station (Pico), etc. which is not limited in the embodiments of the present disclosure. In some network structures, the network device may include a centralized unit (CU) node and a distributed unit (DU) node, and the centralized unit and the distribution unit may also be geographically separated.

The network device and the terminal device may each perform multi-input multi-output (MIMO) transmission by using one or more antennas, and the MIMO transmission may be single user MIMO (SU-MIMO) or multi-user MIMO (multiple user MIMO, MU-MIMO). The MIMO transmission may be two-dimensional MIMO (2D-MIMO), 3-dimensional MIMO (3D-MIMO), full dimension MIMO (FD-MIMO), or massive MIMO (Massive-MIMO), or diversity transmission or precoding transmission or beamforming transmission, according to the form and quantity of the root antenna combination.

The following first describes the content involved in the solutions provided in the embodiments of the present disclosure.

At present, from the perspective of implementation, the base station may consider that the channel of the multi-antenna is turned off, such as turning off the antenna port or some antenna panels, as shown in FIG. 2, after the channel N-1 and the channel N are turned off, the antenna port (corresponding to the structure on the right side in the figure) of the corresponding antenna is deactivated (in the figure, Baseband represents the baseband, the RF represents the radio frequency, and the PA represents the power amplifier). Compared with the 4G base station, the number of channels of the 5G base station is sharply increased, turning off the channel may not only reduce the power consumption of the power amplifier, but also reduce the static power consumption of the channel, and at present, the base station manufacturer has taken turning-off of the channel as a mainstream energy-saving scheme. Compared with the fact that the base station is turned off in the time domain, the channel turn-off has obvious advantages in ensuring service continuity, and the application scenario is not limited to a light load scenario of services of a base station.

Specifically, an existing base station manufacturer uses a semi-static channel turn-off solution, and the base station predicts, according to the load condition and the service characteristics of the UE (terminal), a part of active antenna unit (AAU) channels that can be turned off for a long period of time, and if the long-time turning off of channels obtains a better energy-saving effect, especially in a special time interval such as night. The "semi-static channel shutdown scheme" is determined by using a turn-off time, for example, few services exist in some areas at night, and a base station manufacturer may turn off a radio frequency chain (RF chain) (link) for a long time, referred to as a semi-static channel turn-off.

However, although semi-static AAU channel turn-off is widely used by base station vendors in actual systems; in fact, the arrival of the service in the mobile communication has burst and random characteristics, and the base station is difficult or impossible to preset the upcoming load and service condition; the semi-static turn-off of radio frequency channels is very simple, but is easy to cause that the continuity transmission is destroyed, the transmission delay of the user is significantly increased, the user experience is reduced, and the application scenario is limited, which can only be applied to scenarios where the load is very light and the service is discontinuous.

It can be seen from the above that a network energy-saving information processing solution in the related art has defects such as poor user experience and incapability of matching user requirements.

Based on the foregoing, embodiments of the present disclosure provide an information processing method, an information processing apparatus, a network device, and a terminal, to resolve a problem in the related art that service continuity cannot be ensured, a user experience is poor, and an optimal energy-saving effect cannot be achieved in an energy-saving information processing solution in the related art. The method, the apparatus, the network device, and the terminal are based on the same application concept, and because the method, the apparatus, the network device, and the terminal are similar in principle, the implementation of the method, the apparatus, the network device, and the terminal may be referred to each other, and details are not described herein again.

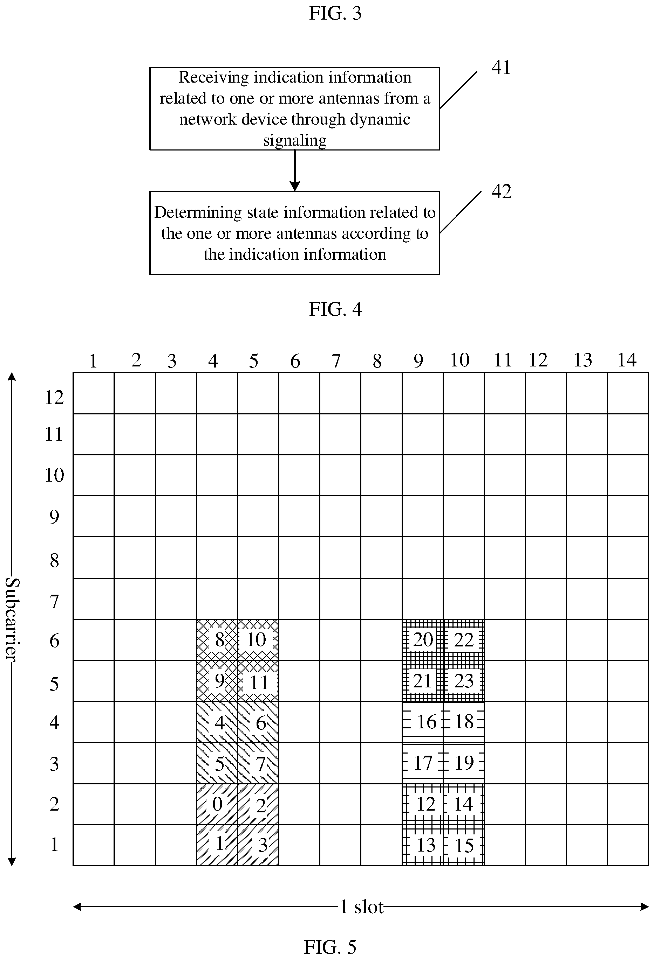

The information processing method provided in the embodiments of the present disclosure is applied to a network device, as shown in FIG. 3, the method includes:

Step 31: determining indication information related to one or more antennas;

Step 32: transmitting the indication information to a terminal by using dynamic signaling, where the indication information is used for energy-saving of the network device.

According to the information processing method provided in the embodiments of the present disclosure, the indication information related to the one or more antennas is determined; and the indication information is transmitted to the terminal by using dynamic signaling; wherein the indication information is used for energy-saving of the network device; the method can support a dynamic channel turn-off solution, so that the base station can perform scheduling according to latest reported information of the terminal, avoid affecting the continuity of the transmission service, increase the delay, and achieve matching of the service load and the actual transmission environment. On the premise that better service is provided for the terminal, the energy consumption of the network (for example, the base station) is better reduced; the problem that the service continuity cannot be ensured, the user experience is poor, and the optimal energy-saving effect cannot be achieved in the information processing solution for energy-saving in the related art is well solved.

In the embodiments of the present disclosure, the indication information may include: antenna port indication information, resource identification information of a reference signal, transmission power information of a reference signal, and the like, which are respectively described below.

Example 1: The indication information is antenna port indication information of a reference signal.
(1) The resource corresponding to the antenna port indication information is determined based on the first predefined information or the network device configuration.

In this way, the resource corresponding to the antenna port indication information may be diversified. The antenna port indication information is configured to indicate at least one of port activation information and port deactivation information.

In this embodiment of the present disclosure, the transmitting the indication information to the terminal by using the dynamic signaling includes at least one of following: transmitting the antenna port indication information to the terminal by using a terminal-specific dynamic signaling; and transmitting the antenna port indication information to the terminal by using a group common dynamic signaling.

In this way, the antenna port indication information may be transmitted in a diversified manner.

(2) The antenna port indication information is bitmap indication information, where an indication granularity of the bitmap indication information is one antenna port or a group of antenna ports.

In this way, indications of multiple granularities may be supported.

The antenna port indication information and each antenna port have a first correspondence, and the first correspondence is predefined, or is configured and indicated to the terminal by the network device.

In this way, the first correspondence may be determined in a diversified manner.

(3) The transmitting the indication information to the terminal by using the dynamic signaling includes: transmitting the first set of antenna port indication information to the terminal; and transmitting the first index to the terminal by using the dynamic signaling, where the first index is configured to indicate, as the target indication information, the antenna port indication information in the first set.

In this way, the complete indication content does not need to be transmitted each time, in the case that the indication is transmitted to the terminal for multiple times, and energy is saved to some extent.

When transmitting the first set of antenna port indication information to the terminal, the method further includes: transmitting, to the terminal, resource identification information related to the reference signal corresponding to the first set.

In this way, the accuracy of the indication information transmission can be further ensured.

In the embodiment of the present disclosure, the resource identification information is implicitly indicated by the location information of the resource related to the reference signal in the signaling configuration.

This may be further energy-saving.

(4) The determining the indication information related to one or more antennas includes: receiving first information from a terminal; and determining antenna port indication information of a reference signal according to the first information, where the first information includes at least one of channel state information (CSI) and preference information related to an antenna port of the reference signal, and the CSI is measurement reporting information for the target resource.

In this way, the requirement of the terminal can be better met. The target resource may be configured or preconfigured by the network device.
1) The preference information includes: a preferred channel state information-reference signal (CSI-RS) antenna port configuration information.
   The preferred CSI-RS antenna port configuration information may include at least one of a preferred number of CSI-RS antenna ports, a preferred CSI-RS antenna port pattern, and a preferred CSI-RS resource index.
2) The CSI includes CSIs corresponding to different antenna ports.

(5) There is an association relationship between the antenna port indication information corresponding to bandwidth parts (BWP).

In this way, the indication information can be used for reference to each other, and all of the pieces of indication information is not necessarily separately confirmed.

The association relationship includes that at least a part of the contents are same. For example, in a nested form, for example, BWP 1 is a small-bandwidth BWP, two antenna port patterns are configured, corresponding to two CSI-RS resources, and the numbers of ports corresponding to the resources are 2 and 4, respectively; BWP 2 is a large-bandwidth BWP, four CSI-RS antenna port patterns are configured on BWP 2, and correspond to four CSI-RS resources, correspond to antenna ports 2, 4, 8, and 16; and a CSI-RS antenna port pattern set corresponding to BWP 1 is a subset of CSI-RS antenna port pattern sets corresponding to BWP 2.

Example 2: The indication information is resource identification information of a reference signal.

In this way, specific resource transmission indication information may be supported.

The transmitting the indication information to the terminal by using the dynamic signaling includes: transmitting the second set of the resource identification information to the terminal; and transmitting the second index to the terminal by using the dynamic signaling, where the second index is configured to indicate the resource identification information in the second set as the target identification information.

In this way, the complete indication content does not need to be transmitted each time in the case that the indication is transmitted to the terminal for multiple times, and energy is saved to some extent.

Example 3: The indication information is transmission power information of a reference signal.

In this way, accurate reference signal measurement results obtained by the terminal side are facilitated.

The determining the indication information related to the one or more antennas includes: receiving the preferred power backoff information from the terminal; and determining the transmission power information of the reference signal according to the preferred power backoff information.

In this way, the transmission power of the reference signal can be dynamically changed, thereby avoiding deterioration of link adaptation performance.

For the above examples, the reference signal may be a channel state information reference signal CSI-RS.

The resource corresponding to the CSI-RS may be at least one CSI-RS resource in a channel state information resource configuration (CSI-ResourceConfig) associated with a channel state information report configuration (CSI-ReportConfig).

An embodiment of the present disclosure further provides an information processing method, applied to a terminal, as shown in FIG. 4, the method includes:

Step 41: receiving indication information related to one or more antennas from a network device through dynamic signaling;

Step 42: determining state information related to the one or more antennas according to the indication information.

The indication information is used for energy-saving of the network device.

The information processing method provided in the embodiments of the present disclosure receives indication information related to one or more antennas from a network device through dynamic signaling; determines state information related to the one or more antennas according to the indication information; so that the base station can perform scheduling according to the latest reported information of the terminal, avoid affecting the continuity of the transmission service, increase the delay, and achieve matching of the service load and the actual transmission environment, and on the premise that better service is provided for the terminal, the energy consumption of the network (for example, the base station) is better reduced; the problem that in the prior art, the service continuity cannot be guaranteed, the user experience is poor, and the optimal energy-saving effect cannot be achieved in the energy-saving information processing scheme in the prior art is well solved.

In the embodiments of the present disclosure, the indication information may include: antenna port indication information, resource identification information of a reference signal, transmission power information of a reference signal, and the like, which are respectively described below.

Example 1: The indication information is antenna port indication information of a reference signal; and the determining state information related to one or more antennas according to the indication information includes: determining state information of an antenna port of the reference signal according to antenna port indication information of the reference signal. In this example, the state information of the antenna port may include: activation state information or deactivation state information of the antenna port, but is not limited thereto.
(1) The resource corresponding to the antenna port indication information is determined based on the first predefined information or the network device configuration.

In this way, the resource corresponding to the antenna port indication information may be diversified. The antenna port indication information is configured to indicate at least one of port activation information and port deactivation information.

In this embodiment of the present disclosure, the receiving indication information related to the one or more antennas from the network device through the dynamic signaling includes at least one of following: receiving the antenna port indication information from the network device by using the terminal-specific dynamic signaling; and receiving the antenna port indication information from the network device by using the group common dynamic signaling.

In this way, the antenna port indication information may be transmitted in a diversified manner.

(2) The antenna port indication information is bitmap indication information, where an indication granularity of the bitmap indication information is an antenna port or a group of antenna ports; and the determining state information of an antenna port of the reference signal according to the antenna port indication information of the reference signal includes: determining state information of one antenna port or a group of antenna ports of the reference signal according to the bitmap indication information.

In this way, an indication of multiple granularities may be supported.

The antenna port indication information and each antenna port have a first correspondence therebetween, and the first correspondence is predefined, or is configured and indicated by the network device; the determining state information of one antenna port or a group of antenna ports of the reference signal according to the bitmap indication information includes: determining state information of one antenna port or a group of antenna ports of the reference signal according to the bitmap indication information and the first correspondence.

In this way, the first correspondence may be determined in a diversified manner.

(3) Receiving the indication information related to the one or more antennas from the network device through dynamic signaling includes: receiving a first set of antenna port indication information from the network device; and receiving a first index from a network device by using dynamic signaling; and obtaining antenna port indication information as target indication information according to the first set and the first index, where the first index is configured to indicate antenna port indication information in the first set as target indication information.

In this way, the complete indication content does not need to be transmitted each time in the case that the indication is transmitted to the terminal for multiple times, and energy is saved to some extent.

When receiving the first set of antenna port indication information from the network device, the method further includes: receiving resource identification information related to the reference signal and corresponding to the first set from the network device; and obtaining the antenna port indication information as target indication information according to the first set and the first index, includes: obtaining antenna port indication information as target indication information according to the first set, the first index, and the resource identification information.

In this way, the accuracy of the indication information transmission can be further ensured. For "obtaining the antenna port indication information as the target indication information according to the first set, the first index, and the resource identification information" is for example implemented as follows: receiving, by the terminal, the CSI-RS antenna port muting and/or availability pattern index indicated by the dynamic signaling, and parsing the corresponding CSI-RS port by the terminal.

In the embodiment of the present disclosure, the resource identification information is implicitly indicated by the location information of the resource related to the reference signal in the signaling configuration.

This may be further energy-saving.

(4) Before receiving the indication information related to the one or more antennas from the network device by using the dynamic signaling, the method further includes: transmitting the first information to the network device, where the first information includes at least one of channel state information (CSI) and preference information related to an antenna port of the reference signal, and the CSI is measurement reporting information for the target resource.

In this way, the requirement of the terminal can be better met. The target resource may be configured or preconfigured by the network device.
1) The preference information includes: preferred channel state information-reference signal (CSI-RS) antenna port configuration information.
   The preferred CSI-RS antenna port configuration information may include at least one of a preferred number of CSI-RS antenna ports, a preferred CSI-RS antenna port pattern, and a preferred CSI-RS resource index.
2) The CSI includes CSIs corresponding to different antenna ports.

(5) There is an association relationship between the pieces of antenna port indication information corresponding to bandwidth parts (BWPs).

In this way, the indication information can be obtained by reference to each other, and all of the pieces of indication information are not necessarily separately confirmed.

The association relationship includes that at least a part of the contents are same. For example, in a nested form, for example, BWP 1 is a small-bandwidth BWP, two antenna port patterns are configured, corresponding to two CSI-RS resources, and the numbers of ports corresponding to the resources are 2 and 4, respectively; BWP 2 is a large-bandwidth BWP, four CSI-RS antenna port patterns are configured on BWP 2, and correspond to four CSI-RS resources, correspond to antenna ports 2, 4, 8, and 16; and a CSI-RS antenna port pattern set corresponding to BWP 1 is a subset of CSI-RS antenna port pattern sets corresponding to BWP 2.

Example 2: The indication information is resource identification information of a reference signal; and the determining state information related to one or more antennas according to the indication information includes: determining state information of a corresponding resource of the reference signal according to the resource identification information. In this example, the state information of the corresponding resource of the reference signal may include: activation state information or deactivation state information of a corresponding resource of the reference signal, but is not limited thereto.

In this way, specific resource transmission indication information may be supported.

The receiving the indication information related to the one or more antennas from the network device through dynamic signaling, includes: receiving a second set of resource identification information from a network device through dynamic signaling; receiving a second index from the network device by using dynamic signaling; and obtaining resource identification information as target identification information according to the second set and the second index, where the second index is configured to indicate resource identification information in the second set as target identification information.

In this way, the complete indication content does not need to be transmitted each time in the case that the indication is transmitted to the terminal for multiple times, and energy is saved to some extent.

Example 3: The indication information is transmission power information of a reference signal; and the determining state information related to one or more antennas according to the indication information includes: determining a transmission power of a corresponding resource of the reference signal according to the transmission power information. In this example, the state information corresponding to the antenna includes a transmission power of a corresponding resource of the reference signal, but is not limited thereto.

In this way, obtaining accurate reference signal measurement results by the terminal is facilitated.

Before receiving the indication information related to the one or more antennas from the network device by using the dynamic signaling, the method further includes: transmitting the preferred power backoff information of the terminal to the network device.

In this way, the transmission power of the reference signal can be dynamically changed, thereby avoiding deterioration of link adaptation performance.

For the above examples, after receiving the indication information related to the one or more antennas from the network device by using the dynamic signaling, the method further includes: not receiving a resource corresponding to unavailable or muting corresponding resource indicated by the indication information.

This may be further energy-saving.

The reference signal may be a channel state information reference signal (CSI-RS).

In this embodiment of the present disclosure, the resource corresponding to the CSI-RS may be at least one CSI-RS resource in a channel state information resource configuration (CSI-ResourceConfig) associated with a channel state information report configuration (CSI-ReportConfig)..

Here, in this solution, the CSI-RS antenna port may be (or is preferably) a set of time/frequency resources, code resources (i.e., time (domain) resources + frequency (domain) resources, or time (domain) resources + frequency (domain) resources + code division resources); from the perspective of terminal side, whether the two transmission signals experience the same channel only depends on whether they are transmitted through the same antenna port. In addition, in the present disclosure, the antenna refers to a logical antenna port, for example, a CSI-RS antenna port. The indication information related to the one or more antennas includes related information of the antenna port, for example, muting information or availability information of the antenna port; or may include related information of the reference signal, for example, information related to a CSI-RS resource (for example, a CSI-RS resource index), but is not limited thereto.

The following describes examples of the information processing method provided in the embodiments of the present disclosure, where the network device is a base station, and the reference signal is a CSI-RS.

In view of the above technical problem, the embodiments of the present disclosure provide an information processing method, which may be specifically implemented as a dynamic channel turn-off solution, which may provide finer spatial domain granularity than a semi-static channel turn-off solution, better match a service load and an actual transmission environment, and better implement energy consumption reduction of a network (for example, a base station) on the premise of providing better service for the UE. The present solution mainly relates to:

The base station side dynamically indicates antenna indication information (corresponding to the indication information related to the one or more antennas) to the terminal side by using dynamic signaling; and the terminal side performs data transmission according to the antenna indication information indicated by the base station. The dynamic signaling may be physical layer signaling (such as a Physical Downlink Control Channel (PDCCH)) and high-layer signaling (such as a Medium Access Control-Control Element (MAC-CE)); the antenna indication information may be CSI-RS antenna port muting information carried by CSI-RS antenna port information; Performing data transmission may include channel measurement, and/or CSI obtaining and reporting, and/or receiving a physical downlink shared channel (PDSCH).

The operation of dynamically indicating the antenna indication information to the terminal side by using dynamic signaling by the base station side may be implemented by at least one of following four solutions:
1. The base station indicates the transmission pattern information of the CSI-RS by using the dynamic signaling, and the transmission pattern information may be used to indicate CSI-RS antenna port muting information (corresponding to a specific example of the antenna port indication information).
2. The base station configures a transmission pattern set (corresponding to a specific example of the first set), and then dynamically indicates a pattern index (corresponding to a specific example of the first index).
3. The base station configures a plurality of CSI-RS resources (each BWP), and notifies, by using dynamic signaling, to the terminal a CSI-RS resource that needs to be activated by the terminal (corresponding to a case where the indication information is the resource identification information of the reference signal)
4. The base station notifies to the terminal the CSI-RS antenna port information by using dynamic signaling according to the preference indication pattern and/or the pattern index reported by the terminal (corresponding to the case that the antenna port indication information of the reference signal is determined according to the first information).
5. The base station notifies to the terminal the transmission power information corresponding to the CSI-RS signal by using the dynamic signaling according to the preferred power backoff information reported by the terminal (corresponding to the case of determining the transmission power information of the reference signal according to the preferred power backoff information).

Based on the foregoing, this solution relates to: the base station determines the antenna indication information (corresponding to the antenna indication information) of the transmit end, the base station dynamically indicates the antenna indication information (i.e. the antenna indication information of the transmit end) of the transmit end by using the dynamic signaling, and the terminal may receive the downlink signal and/or the channel based on the antenna indication information indicated by the base station, or perform CSI reporting, and the like. Specifically, the base station may indicate the antenna indication information to the terminal by using the PDCCH and/or the MAC-CE, and the terminal may perform channel measurement, and/or CSI obtaining and reporting, and/or receive a physical downlink shared channel (PDSCH) according to the antenna indication information dynamically indicated by the base station. The antenna indication information may specifically be CSI-RS antenna port information, CSI-RS resource identification information, CSI-RS transmission power, and the like, but is not limited thereto. The CSI-RS antenna port information may include muting information of a CSI-RS antenna port, for example, there is one piece of CSI-RS pattern information in each Physical Resource Block (PRB), and this pattern may support M paths of orthogonal pilots, that is, the number of ports is M, and some of the M ports are now partially deactivated by means of dynamic signaling, and the pattern of the deactivating may be understood to be that some REs (resource elements) are punctured or not transmitted. The following further describes the content included in the solution:

Solution 1: The base station may indicate transmission pattern information of a reference signal by using a PDCCH and/or a MAC-CE, where the information may include: CSI-RS antenna port muting and/or availability indication information (following "1.1", "1.2", and "1.3" may be used together or separately).
1.1 the base station may configure a CSI-RS resource (corresponding to a resource corresponding to the antenna port indication information) for the terminal by using Radio Resource Control (RRC) signaling, and optionally, the CSI-RS resource may be a CSI-RS resource used for CSI obtaining and reporting.

Specifically, the CSI-RS resource may be a CSI-RS resource associated with the CSI-ReportConfig.

More specifically, the CSI-RS resource may be at least one CSI-RS resource in the CSI-ResourceConfig associated with the CSI-ReportConfig; and the terminal may determine the CSI-RS resource (that is, the resource corresponding to the antenna port indication information is determined according to first predefined information or configuration from the network device) according to a predetermined rule or a configuration of the base station.

1.2. the base station may use the dynamic signaling to indicate CSI-RS antenna port muting and/or availability (indication) information corresponding to the CSI-RS resource configured by the RRC signaling;
a bitmap may be used to carry the antenna port muting and/or availability information (that is, the antenna port indication information is the bitmap indication information), the base station may notify the terminal of the mapping relationship between the bitmap and the antenna port by using a higher layer signaling or a predefined method (that is, there is a first correspondence between the antenna port indication information and each antenna port, where the first correspondence is predefined, or is configured by the network device and indicated to the terminal); specifically:
(1) each bit may indicate on port;
(2) each bit may indicate a group of ports;
(3) "1" may be used to indicate that the corresponding port is muting, and "0" may be used to indicate an activation state of a corresponding port;
(4) "0" is used to indicate that the availability of the corresponding port is "unavailable", and "1" is used to indicate that the availability of the corresponding port is "available".

1.3. the UE may receive the dynamic signaling; and instruct the antenna port to update for performing downlink signal reception according to the CSI-RS antenna port muting and/or availability carried in the dynamic signaling (for example, the dynamic signaling is 111, the antenna port state information may be determined according to the signaling and the mapping relationship, and the antenna port is indicated according to the state information to update to perform downlink signal reception). The UE may consider that the CSI-RS resource corresponding to the antenna port indicated as "unavailable" or "muting" by the dynamic signaling does not exist or is punctured. wherein:

The UE may determine the CSI-RS resource corresponding to the CSI-RS antenna port muting and/or availability indication from the CSI-ResourceConfig associated with the CSI-ReportConfig according to the configuration information of the base station or a predetermined rule (such as a predetermined correspondence).

Solution 2: The base station may configure a CSI-RS antenna port muting and/or availability pattern set (corresponding to the first set) by using higher layer signaling, and the base station indicates to a terminal a CSI-RS antenna port muting and/or availability pattern index (corresponding to the first index) by using a dynamic signaling PDCCH and/or a MAC-CE, where the CSI-RS antenna port muting and/or availability pattern set is a subordinate concept of transmission pattern information of the reference signal. Since the distribution of the CSI-RS ports in one PRB is a pattern, there are many options for how this pattern is muting, and therefore is a muting pattern. wherein:
the higher layer signaling may further include, besides the CSI-RS antenna port muting and/or availability pattern set, CSI-RS resource identification information (corresponding to transmitting, to the terminal, resource identification information related to the reference signal corresponding to the first set);

Specifically, the CSI-RS resource identifier may be implicitly indicated by using the location information of the CSI-RS resource in the signaling configuration (that is, the resource identification information being implicitly indicated by the location information of the resource related to the reference signal in the signaling configuration).

Solution 3: the base station side may configure a plurality of CSI-RS resources per BWP (each BWP), and after determining the CSI-RS resource that needs to be activated subsequently, the base station notifies the terminal to update the CSI-RS resource information (corresponding to the case that the indication information is the resource identification information of the reference signal) by using the dynamic signaling. The above solutions 1 and 2 are configured with a large CSI-RS pattern, and the terminal indicates a muting pattern; here, a plurality of resources are directly configured to indicate the activated CSI-RS resource set, and the pattern is no longer indicated. wherein:
(1) CSI-RS resource information includes at least an activated or updated CSI-RS resource index;
(2) the UE receives the updated CSI-RS resource, and it is assumed that the inactive CSI-RS resource does not exist (that is, the inactive CSI-RS resource is not received). Regarding "the UE receives the updated CSI-RS resource", the CSI-RS resource that is not indicated when updating may be considered to be deactivated; and the specific RRC signaling configuration resource may be that only L1 (layer 1) signaling and/or MAC-CE indicate that the resource exists.

Solution 4:the base station determines a method for antenna indication information at a transmitting end, including at least one of following:

4.1 the base station determines to transmit (end) antenna indication information according to transmission antenna information (corresponding to preference information related to the one or more antennas port) that is reported by the UE and that is preferred by the UE, where:
the UE may periodically report the preferred CSI-RS antenna port configuration information, and the configuration information may include:
at least one of the number of preferred CSI-RS antenna ports, a preferred CSI-RS antenna port pattern, and a preferred CSI-RS resource index.

4.2. the base station may determine to the transmit (end) antenna indication information according to channel-quality-related information (that is, the first information includes the channel state information CSI) corresponding to different CSI-RS antenna ports and reported by the UE, where:
the UE may report channel-quality-related information corresponding to different CSI-RS antenna ports to the network side according to the configuration of the base station, wherein, the following steps are involved:
(1) the base station configures antenna port information required to be measured by the UE;
(2) the base station transmits to the UE a multi-port measurement report indication according to the antenna port information to be measured by the UE; and subsequently the UE may report the channel-quality-related information according to the indication.

In this solution, the base station may configure a group of CSI-RS antenna port patterns or different CSI-RS resources for a group of antenna ports for the terminal, and the terminal may perform channel measurement according to the indication of the base station, to obtain CSI-report information such as Reference Signal Received Power (RSRP) and/or Reference Signal Received Quality (RSRQ), and periodically report the CSI-report information to the base station.

Optionally, the base station may transmit, to the UE by using higher layer signaling and/or physical layer signaling, an indication indicating that "the UE reports channel measurement information and/or channel quality information corresponding to different antenna ports to the base station", and the UE may report channel measurement information and/or channel quality information according to the indication of the base station. For example, the base station may configure CSI-RS resources corresponding to one antenna port pattern on one BWP for the terminal; and after receiving the multi-port measurement reporting indication transmitted by the base station, the UE may perform the CSI report to the base station by using the implemented method, and report the antenna port information corresponding to the CSI-RS resource. It may be understood that for the same antenna port pattern, the multiple UEs may separately assume that CSI-RSs corresponding to some of the ports do not exist, perform measurement in an implementation manner, and report a measurement result to the base station. Then, the base station makes a comprehensive determination according to the conditions of the plurality of UEs served (including determining antenna port indication information corresponding to each UE).

In the foregoing 4.1 and 4.2, the base station may finally determine an index in a pattern or a pattern set, and then transmit the index to the terminal. Specifically, 4.1 is determined according to the preference reported by the terminal, and 4.2 is determined according to the channel quality reported by the UE.

Herein, the foregoing solutions 1 to 4 may form an "and/or" relationship therebetween, which is not limited herein.

The solutions provided in the embodiments of the present disclosure are specifically exemplified below.

Example 1 (corresponding to "1.1" and "1.3" in the above solution 1, which belongs to the case where the indication information is the antenna port indication information of the reference signal):

In this example, the base station notifies the terminal of the indication information related to the one or more antennas by using signaling.

Optionally, the signaling is a dynamic signaling, for example, a PDCCH or a MAC-CE, and the PDCCH is a physical layer dynamic signaling, so that a base station can quickly transmit a notification of antenna information, for example, a UE-specific search space (USS) or a downlink control information (DCI) format 1_1, a DCI format 0_1, a DCI format 1_2, DCI format 0_2, etc. transmitted in a type 3 CC (i.e. a common search space (CSS)). The MAC-CE is a media access control-control element, corresponding to Hybrid Automatic Repeat Request Acknowledgement (HARQ-ACK) feedback, and same understanding between the terminal side and the base station side may be ensured by using a handshake mechanism. The dynamic signaling is a preferable selection, but the solution does not exclude that information related to the one or more antennas is notified by the base station side through other signaling, for example, by semi-static RRC signaling.

Optionally, the base station notifies, by using UE specific notification, the terminal of the transmission-antenna related information of the base station side (that is, using the UE specific dynamic signaling to transmit the antenna port indication information to the terminal); optionally, the base station side may notify a group of terminal of the antenna related information of the base station side by using group common dynamic signaling and/or semi-static signaling. Since the multiple antennas of the base station often serve a group of UEs at the same time, the base station may use the group common signaling to notify the terminal of the antenna information of the base station (that is, using the group common dynamic signaling to transmit the antenna port indication information to the terminal), for example, the DCI format 2_x transmitted in the type 3 CSS can better match the antenna information with the corresponding UE, which may significantly reduce the signaling overhead and the notification delay.

The antenna-related information transmitted by the base station side may be information related to reference signal configuration or transmission pattern information of a reference signal. Here, the configuration information refers to transmission pattern information of the CSI-RS, rather than configuration information of a transmission occasion of the CSI-RS, and the former is a transmission pattern and/or mode information on an occasion, and the latter is how each occasion is configured periodically. Optionally, the information related to reference signal configuration may be information related to the one or more antennas port, and may be preferably information related to the CSI-RS antenna port. More specifically, the information related to the CSI-RS antenna port may be a CSI-RS antenna port muting indication or a CSI-RS antenna port availability indication. Based on the foregoing, the solution process of this example may include the following content:
1. First, a base station configures a CSI-RS resource for a terminal by using RRC signaling; optionally, the CSI-RS resource is a CSI-RS resource used for CSI obtaining and reporting (the CSI is, for example, CQI, PMI, LI, RI, L1-RSRP, L1-SINR, etc.), the CSI-RS resource is a CSI-RS resource associated with higher layer signaling CSI-ReportConfig, and more specifically, the CSI-RS resource is a first number of CSI-RS resources in CSI-ResourceConfig associated with CSI-ReportConfig. Optionally, the first number of CSI-RS resources may be specified by a predefined (for example, predefined by a protocol) method or by the base station using signaling to notify the terminal (that is, the resource corresponding to the antenna port indication information is determined according to first predefined information or configuration of the network device): for example, it is assumed that there is only one CSI-RS resource, and the protocol may agree that the CSI-RS resource is the CSI-RS resource with the largest CSI-RS resource port number associated with the CSI-ReportConfig; or the base station notifies the terminal of the first number of CSI-RS resources in the CSI-ResourceConfig associated with the CSI-ReportConfig by using higher layer signaling, Optionally, the base station notifies the terminal of the corresponding non-zero power CSI-RS resource identifier, that is, the NZP-CSI-RS-ResourceID, by using higher layer signaling. The CQI represents a Channel Quality Indicator; the PMI represents a Precoding Matrix Indicator; the RI represents a Rank Indicator; and L1 represents a physical side or a layer 1

For example, the CSI-RS resource is an N-port CSI-RS. As shown in FIG. 5, it is assumed that the CSI-RS resource antenna port is 24, which is composed of six Code Division Multiplexing (CDM) groups, and each CDM group includes four ports. A CDM group of K ports in NR (new radio) means that CSI-RS ports of K antenna ports actually occupy K identical REs (resource elements), and a transmitting end multiplexes and modulates CSI-RS signals of different antenna ports together through orthogonal codewords. Each CDM group shown in FIG. 5 may provide four antenna ports for one UE, and different CDM groups are combined by frequency division multiplexing (FDM) and time division multiplexing (TDM) to form CSI-RSs of 24 antenna ports. Different CDM groups in FIG. 5 correspond to different padding, and may also be understood as: one type of padding corresponds to one CDM group.

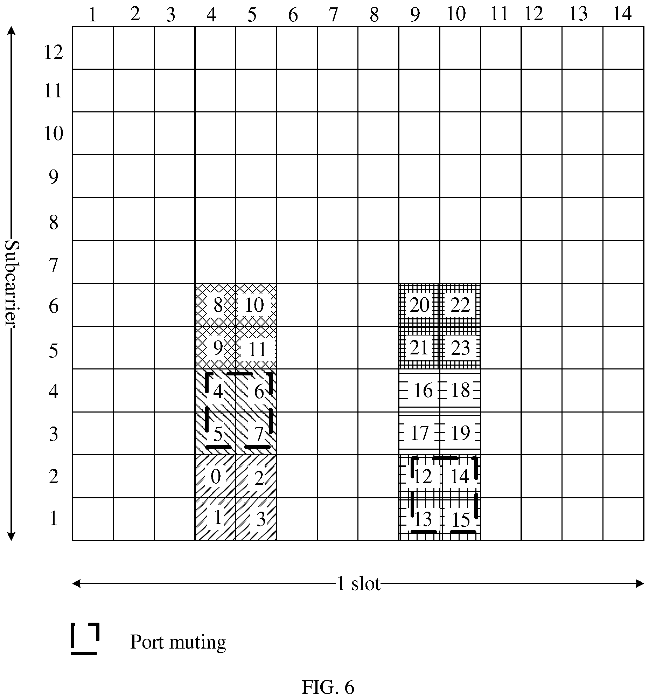

2 ) the base station uses dynamic signaling to indicate CSI-RS antenna port muting and/or availability; the base station indicates CSI-RS antenna port muting and/or availability by using a MAC CE or a PDCCH. An example of the CSI-RS antenna port muting is shown in FIG. 6. The 24 CSI-RS antenna ports are described in FIG. 5, wherein the ports 4, 5, 6, 7, 12, 13, 14, and 15 are muting and are no longer available, that is, multiple REs labeled with muting in FIG. 6 no longer transmit corresponding reference signals, so that the remaining 16 antenna ports of the CSI-RS shown in FIG. 6 can be used.

3) The UE receives the dynamic signaling; and according to the CSI-RS antenna port muting and/or availability carried in the dynamic signaling, indicates to perform the transmitting and receiving operations, for example, perform CSI measurement and CSI reporting. The UE may assume that the inactive CSI-RS resource or the muting CSI-RS port does not exist, that is, the CSI-RS is not received on the muting port.

The UE receives a CSI-RS antenna port muting and/or availability indication, and the UE determines a first number of CSI-RS resources associated with the CSI-RS antenna port muting and/or availability indication, where the CSI-RS resource is a first number of CSI-RS resources in CSI-ResourceConfig associated with higher layer signaling CSI-ReportConfig, The association relationship is notified to the terminal by using higher layer signaling or is obtained by the terminal through a predefined method (that is, the resource corresponding to the antenna port indication information is determined according to first predefined information or the configuration of the network device).

The method for determining the corresponding CSI-RS resource by the UE is not limited to this example, and details are not described herein again.

In this example, the base station notifies the terminal of the information related to CSI-RS antenna port muting and/or availability by using signaling, and the terminal side can perform correct channel estimation, channel and signal measurement and feedback by using the latest CSI-RS port configuration, thereby facilitating the base station side to reduce the number of transmitting antennas, thereby reducing the number of RF chains (radio frequency links), and greatly saving network energy consumption.

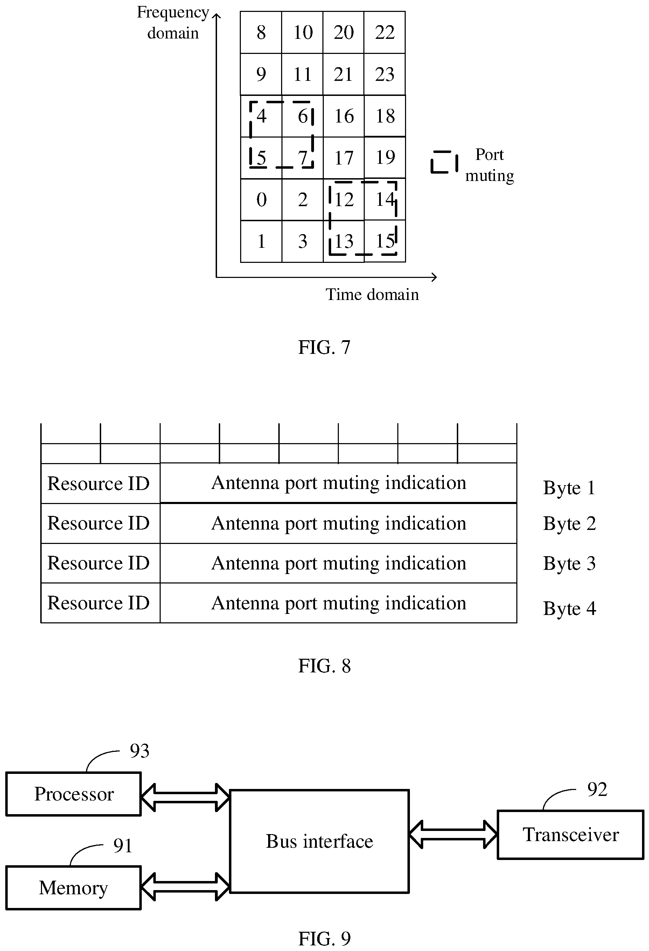

Example 2: (corresponding to 1.2 and 1.3 in the solution 1 above; which is related to details of the information related to dynamic signaling PDCCH and/or MAC-CE indicating CSI-RS Antenna Port Muting information and signaling; belonging to the case that the indication information is antenna port indication information of the reference signal);
the base station side may implement dynamic antenna adaptation according to the CSI-RS antenna port muting and/or availability indicated by the dynamic signaling. A specific indication method in this example is given below. A method for indicating CSI-RS antenna port muting and/or availability by using dynamic signaling may alternatively be using a bitmap (that is, the foregoing antenna port indication information being bitmap indication information), and both the MAC CE and the PDCCH may be used as bearer signaling. Specifically,
the dynamic signaling PDCCH and/or the MAC-CE may include a bitmap of antenna port muting and/or availability;
for example, the bitmap may be a (time and frequency) 2-dimensional bitmap, and the number of antenna ports available for the CSI-RS shown in FIG. 7 is reduced to 16. For example, when ports 4, 5, 6, 7, 12, 13, 14, and 15 are muting, "1" may be used in the bitmap to indicate that the corresponding port is muting, and "0" indicates the corresponding port being activated; certainly, for example, "0" may also be used to identify that the availability of the corresponding port is "unavailable", and "1" indicates that the availability of the corresponding port is "available". The maximum length of the bitmap may be 32 bits, the antenna port muting and/or availability indication of the 24 ports may occupy 24 bits before bitmap, and the subsequent 8 positions may be reserved bits. Optionally, the bitmap may be carried by using a non-scheduled DCI. In the foregoing description, the granularity indicated by the bitmap may be an indication per antenna port, that is, each bit indicates one port (corresponding to the indication granularity of the bitmap indication information being one antenna port); considering that the indication per antenna port has large signaling overhead, another method is provided: one bit of the bitmap indicates a group of ports, That is, the indication per antenna port group" (that is, the indication granularity of the bitmap indication information is a group of antenna ports); the grouping and/or mapping method of the antenna port group may be selected by a predefined method, or the base station notifies the terminal through higher layer signaling.

Taking the predefined method as an example, the protocol may agree in advance: the group of antenna ports corresponds to the CDM group of one antenna port, and the definition of the CDM group is as shown in example 1; the base station may configure the granularity of the antenna port corresponding to the muting indication by using higher layer signaling, for example, the granularity is 2, and 1 bit in the bitmap corresponds to two adjacent ports.

Certainly, the bitmap may alternatively be indicated by using a MAC-CE, and the MAC CE may include: CSI-RS resource ID and antenna port muting information, for example, as shown in FIG. 8, it should be noted that the proportion and the number of rows in each field in FIG. 8 are merely an example, and are not particularly limited.

In this example, the UE side receives the corresponding dynamic signaling (such as PDCCH and/or MAC-CE signaling) to obtain the CSI-RS antenna port muting information indication carried in the signaling, and the UE may perform receiving and transmitting operations, such as channel estimation, CSI obtaining and reporting, according to the dynamically indicated CSI-RS port.

In this example, the network side enables the antenna port muting and/or availability indication information to be carried the PDCCH and/or the MAC-CE, which facilitates the base station to dynamically execute turn-off of the antenna channel, and gives a specific indication solution based on the bitmap for the dynamic signaling, and each bit indicating one port can provide the most flexible antenna port indication; and each bit indicating a group of ports can significantly reduce signaling overheads.

Example 3: (corresponding to the solution 2 above; which is related to: the base station configures multiple CSI-RS antenna port muting and/or availability patterns, the base station uses the dynamic signaling to indicate the port muting and/or availability pattern index; belonging to the case that the indication information is the antenna port indication information of the reference signal);
in this example, the base station may use the dynamic signaling to indicate CSI-RS antenna port muting and/or availability pattern index (corresponding to the above first index), and the base station uses the dynamic signaling to indicate a CSI-RS antenna port muting and/or availability pattern set (corresponding to the first set); the base station uses the dynamic signaling PDCCH and/or MAC-CE to indicate to the terminal the CSI-RS antenna port muting and/or availability pattern index, specific steps are given below:
1) the base station configures CSI-RS resources for the terminal by using higher layer signaling (such as RRC signaling) (see the current NR solution).
2) the base station configures at least one CSI-RS antenna port pattern for the terminal by using higher layer signaling (for example, RRC signaling), to form a CSI-RS antenna port pattern set. The antenna port pattern set corresponds to the CSI-RS resource configured for the UE in step 1.
3) the base station uses the dynamic signaling (such as PDCCH and/or MAC-CE) to indicate the CSI-RS antenna port muting and/or availability pattern index for the terminal.
4) the terminal receives the CSI-RS antenna port muting and/or availability pattern index indicated by the dynamic signaling, parses the corresponding CSI-RS port, and performs channel and/or signal receiving, measurement, and feedback by using the updated CSI-RS port.

Optionally, the higher layer signaling for configuring the CSI-RS antenna port muting and/or availability pattern set may further include CSI-RS resource identification information (that is, transmitting, to the terminal, resource identification information corresponding to the reference signal and related to the first set), and each carrier or each BWP is configured with only one CSI-RS antenna port muting and/or availability pattern set, which corresponds to one CSI-RS resource. The CSI-RS resource identifier may be implicitly indicated by using a predetermined rule. For example, the solution does not exclude a case in which the base station side configures a plurality of CSI-RS resources for one carrier, and if the base station side configures a plurality of CSI-RS resources for each carrier for CSI-RS measurement and reporting; optionally, the CSI-RS antenna port muting and/or availability pattern set corresponds to one CSI-RS resource, for example, CSI-RS resources with the largest antenna port. Considering that the CSI-RS resource ID may occupy more signaling overhead, optionally, the position information of the CSI-RS resource in the signaling configuration may be implicitly indicated (that is, the resource identification information being implicitly indicated by the location information of the resource related to the reference signal in the signaling configuration), for example, the first configured CSI-RS resource or last configured CSI-RS resource in the higher layer signaling corresponds to the CSI-RS resources with the largest antenna port, or the CSI-RS resource set corresponding to the CSI-RS antenna port muting and/or availability pattern set.

In this example, optionally, when the base station configures the CSI-RS resource set, the antenna port pattern set corresponding to the CSI-RS resource set is configured by using higher layer signaling, so that the antenna port pattern index information (optionally, the information includes the index value and the CSI-RS resource identification information) is indicated by using the dynamic signaling, which is beneficial to reducing the indication signaling overhead, and is particularly suitable for the scheduling DCI to carry the CSI-RS antenna port muting and/or availability indication information.

Example 4: (corresponding to the foregoing solution 3; which is related to: the base station side configures a plurality of CSI-RS resources for the terminal, and different resources correspond to different pieces of transmitting antenna information; and belong to a case where the indication information is the resource identification information of the reference signal).

The transmission antenna indication information of the base station side in example 1 is actually CSI-RS antenna port muting and/or availability indication information in examples 2 and 3. The transmission antenna indication information may also be CSI-RS resource identification information, where the base station side configures a plurality of candidate CSI-RS resources for one BWP, and after determining the CSI-RS resources that need to be activated subsequently (the determining method will be described later), the base station notifies the terminal of the activated CSI-RS resource identification information by using dynamic signaling; after receiving the indication information by the terminal side, the terminal side performs channel and/or signal reception, measurement, and CSI feedback by using a CSI-RS resource corresponding to the CSI-RS resource index according to the indication of the CSI-RS resource index. Assuming that the base station configures three CSI-RS resources for one BWP, and the numbers of ports corresponding to three CSI-RS resources are 32, 16, 8, and 4 respectively which correspond to the CSI-RS resource indexes 0, 1, 2, and 3, the base station uses the dynamic signaling to indicate the identifier "2", and then the UE only receives the CSI-RS resources of the 8 ports; and then the base station also indicates the identifier "0", and then the terminal changes to receive the 32-port CSI-RS configured by the RRC signaling.

Example 5: (corresponding to solution 4; which relates to: the base station side determines the antenna indication information at the transmit end, the method 1; the case that the indication information is the antenna port indication information of the reference signal);
before the base station side notifies the terminal to transmit the antenna indication information, the base station needs to determine the transmission (end) antenna indication information, where the base station determines the transmission antenna indication information according to the transmission antenna information preferred by the UE (that is, the preference information related to the one or more antennas port of the reference signal) and reported by the UE. More specifically, the UE reports to the base station the preferred CSI-RS antenna port configuration information according to the configuration of the base station (that is, the preference information includes: the preferred channel state information-reference signal CSI-RS antenna port configuration information); optionally, the UE periodically reports the preferred CSI-RS antenna port configuration information, such as the preferred number of CSI-RS antenna ports, or the preferred CSI-RS antenna port pattern, or the preferred CSI-RS resource index, to the base station. For example, as shown in Example 3 or Example 4, the base station configures a set of CSI-RS antenna port patterns or different CSI-RS resources of a set of antenna ports for the terminal, and the terminal reports to the base station after the terminal performs measurement such as RSRP and/or RSRQ according to indication of the base station and determines the preferred transmission antenna port configuration information, so as to provide reference for the base station in determining the transmission antenna indication information.

In this example, the UE directly reports the preferred transmission antenna information, which can facilitate the UE to determine the optimal number of antenna ports by using the implemented method, and directly report the optimal number of antenna ports to the terminal, the feedback information of the UE is small, and the implementation complexity is low.

Example 6: (corresponding to 4.2 in solution 4 above; which is related to: the base station side determines the transmission end antenna indication information and the method 2; belongs to the case that the indication information is the antenna port indication information of the reference signal);
In this example, a method for determining, by a base station side, to transmission antenna indication information includes: reporting, by the UE, channel quality information (that is, the first information includes the CSI) corresponding to different transmission antenna configuration information to the base station by using a Physical Uplink Control Channel (PUCCH) and/or a Physical Uplink Shared Channel (PUSCH) according to a configuration period and/or a non-period of the base station, and more specifically, the UE reports, to the network side according to the configuration of the base station, channel quality related information corresponding to different CSI-RS antenna ports (that is, the CSI includes CSI corresponding to different antenna ports). For example, as shown in Example 3 or Example 4, the base station first configures, for the UE, antenna port information that needs to be measured: for example, the base station configures a group of CSI-RS antenna port patterns for the terminal, or different CSI-RS resource sets of a group of antenna ports, and the terminal performs channel measurement, for example, CSI-report information such as RSRP and/or RSRQ according to the indication of the base station, and periodically reports the CSI-report information to the base station.

Optionally, the base station transmits, to the UE by using higher layer signaling and/or physical layer signaling, an indication that "indicating the UE to report the channel measurement and/or the channel quality information report corresponding to different antenna ports to the base station", and the UE reports the channel measurement and/or channel quality information according to the indication of the base station. For example, the base station may only configure a CSI-RS resource corresponding to one antenna port pattern on one BWP for the terminal, and the base station transmits a multi-antenna port measurement reporting indication to the UE; and after receiving the multi-antenna port measurement reporting indication transmitted by the base station, the UE performs CSI report to the base station by using an implementation method, and reports antenna port information corresponding to the CSI-RS.

In this example, according to the multi-port CSI-report information, the base station can accurately determine the transmission-antenna related information of the base station side, which can effectively avoid the deterioration of the receiving performance of the UE side.

Example 7 (corresponding to the case where the indication information is the antenna port indication information of the reference signal);
In examples 1 to 4, the base station explicitly indicates, to the terminal by using dynamic signaling and/or semi-static signaling, indication information related to the one or more antennas, and the other method is that the base station implicitly indicates the indication information related to the one or more antennas by using the dynamic signaling. Optionally, the base station configures a group of CSI-RS antenna port muting and/or availability pattern sets per BWP for the terminal (configuring a group of CSI-RS antenna ports on the base station side) for measurement by the UE to obtain and report the CSI-RS. The group of CSI-RS antenna port muting and/or availability patterns may correspond to a group of CSI-RS resources (for example, each CSI-RS resource corresponds to one CSI-RS antenna port mode), or corresponds to one CSI-RS resource (in this case, an optional CSI-RS resource corresponds to one CSI-RS antenna port mode, and a plurality of subsets of the CSI-RS antenna port patterns correspond to the group of CSI-RS antenna port patterns). The terminal may obtain the antenna port pattern according to different CSI-RSs configured by the base station, obtain channel quality information, and perform CSI report.

Optionally, there is an association relationship between CSI-RS resource port information configured by the base station for the terminal per BWP (that is, there is an association relationship between the antenna port indication information corresponding to each bandwidth parts BWPs), for example, the plurality of antenna port modes configured for the BWPs may be the same, or there is a nested relationship (the association relationship includes at least part of the content being the same), for example, BWP 1 is a small bandwidth BWP, two antenna port patterns are configured for BWP 1 and corresponds to two CSI-RS resources, and the numbers of ports are 2 and 4, respectively; the BWP 2 is a large-bandwidth BWP, four CSI-RS antenna port patterns are configured on the BWP 2, and correspond to four CSI-RS resources, and correspond to antenna ports 2, 4, 8, 16; and the CSI-RS antenna port pattern set corresponding to the BWP 1 is a subset of the CSI-RS antenna port pattern set corresponding to the BWP 2.

The base station side may using the dynamic signaling to trigger BWP switching, according to channel quality information or antenna port preference information corresponding to different CSI-RS antenna ports reported by the UE using the method in example 5 or 6, thereby changing the CSI-RS antenna port configuration at the base station side.

In this example, the antenna-related information may include at least CSI-RS antenna port information; the CSI-RS antenna port may be availability information or CSI-RS antenna port muting information, and may further include the CSI-RS transmit power information involved in Embodiment 8, but is not limited thereto.

In this example: the base station configures the CSI-RS antenna port pattern set to be measured by the UE, and because there is an association relationship between the antenna ports configured for each BWP, the CSI measurement result obtained in one BWP in one carrier is also applicable to another BWP, and the base station can switch the CSI-RS resources at different ports on the base station side by triggering the BWP switching path through the DCI, thereby facilitating the base station side to dynamically turn off the radio frequency channel: the method needs to switch a BWP, and does not adversely affect a UE (including a UE supporting an old version standard, such as a UE supporting standards such as R15, R16, and R17).

Example 8 (corresponding to the case that the indication information is the transmission power information of the reference signal): The antenna-related indication information may further include: transmission power information (corresponding to transmission power information of the reference signal) of the CSI-RS resource, optionally, the transmission power information is a bias of the CSI-RS transmission power relative to the SSB transmission power. Optionally, the terminal reports the power backoff information (corresponding to the preferred power backoff information) to the base station. Optionally, the base station indicates, based on the power backoff information reported by the UE, the transmission power information corresponding to the CSI-RS signal to the terminal by using the dynamic signaling, for example, the offset between the transmission power of the CSI-RS and the transmission power of the SSB.

In this example, for the case in the prior art that the transmission power information of the CSI-RS resource is configured by the semi-static signaling, the transmission power of the CSI-RS resource is configured by using the dynamic signaling, so that the accurate CSI measurement result is obtained at the UE side; because the base station side directly reduces the transmission power of the PDSCH according to the power backoff value fed back by the UE, the estimation of the SINR at the UE side is affected, thereby affecting the reception effect of the minimum mean squared error (MMSE) reception, and finally affecting the feedback result of the channel quality, thereby affecting the performance of link adaptation. The method in this method may dynamically change the transmission power of the reference signal, and deterioration of the link adaptation performance can be avoided.

In summary, for the case that the AAU energy consumption at the base station side is the main part of the energy consumption of the 5G base station, the embodiments of the present disclosure provide the above information processing method, which may implement the dynamic execution of the antenna turn-off at the base station side, and does not significantly affect the performance of the UE. Dynamic adaptation of the transmission antenna at the network side may be implemented, and implements the effective energy-saving at the network side. The terminal may report channel measurement and/or channel quality information according to the dynamic indication; and the base station may schedule the terminal according to the latest reported information of the terminal, to avoid affecting the continuity of the transmission service and increased delay, and implement the matching service load.

An embodiment of the present disclosure further provides a network device, as shown in FIG. 9, including a memory 91, a transceiver 92, and a processor 93:
the memory 91 is configured to store a computer program; the transceiver 92 is configured to transmit and receive data under the control of the processor 93; and the processor 93 is configured to read the computer program in the memory 91 and perform the following operations:
determining indication information related to one or more antennas; and
transmitting, by the transceiver 92, the indication information to a terminal by using dynamic signaling; and

The indication information is used for energy-saving of the network device.

The network device provided in the embodiments of the present disclosure determines the indication information related to the one or more antennas; and transmits the indication information to the terminal by using dynamic signaling; wherein the indication information is used for energy-saving of the network device, and can support a solution of dynamic channel turn-off; so that the base station can perform scheduling according to the latest reported information of the terminal, avoid affecting the continuity of the transmission service and the increased delay, and achieve matching of the service load with the actual transmission environment. On the premise that better service is provided for the terminal, the energy consumption of the network (for example, the base station) is better reduced; the problem that in the prior art, the service continuity cannot be guaranteed, the user experience is poor, and the optimal energy-saving effect cannot be achieved in the energy-saving information processing solution in the prior art is well solved.

Specifically, the transceiver 92 is configured to receive and transmit data under the control of the processor 93.

In FIG. 9, the bus architecture may include any number of interconnected buses and bridges, and specifically, various circuits of one or more processors represented by the processor 93 and a memory represented by the memory 91 are linked together. The bus architecture may also link various other circuits, such as a peripheral device, a voltage regulator, and a power management circuit, which are well known in the art, and therefore are not further described herein. The bus interface provides an interface. The transceiver 92 may be a plurality of elements, including a transmitter and a receiver, and provides units for communicating with various other apparatuses on a transmission medium, where the transmission mediums include transmission media such as a wireless channel, a wired channel, and an optical cable. The processor 93 is responsible for managing the bus architecture and general processing, and the memory 91 may store data used by the processor 93 when performing operations.

The processor 93 may be a Central Process Unit (CPU), an Application Specific Integrated Circuit (ASIC), a Field-Programmable Gate Array (FPGA), or a Complex Programmable Logic Device (CPLD), and the processor may also adopt a multi-core architecture.

The processor is configured to invoke the computer program stored in the memory, to perform any one of the methods provided in the embodiments of the present disclosure according to the obtained executable instruction. The processor and the memory may also be physically separated.

The indication information is antenna port indication information of a reference signal.

In the embodiments of the present disclosure, the resource corresponding to the antenna port indication information is determined according to first predefined information or configuration from the network device.

The antenna port indication information is configured to indicate at least one of port activation information and port deactivation information.

In this embodiment of the present disclosure, the transmitting the indication information to the terminal by using the dynamic signaling includes at least one of following: transmitting the antenna port indication information to the terminal by using the terminal-specific dynamic signaling; and transmitting the antenna port indication information to the terminal by using the group common dynamic signaling.

The antenna port indication information is bitmap indication information, where an indication granularity of the bitmap indication information is one antenna port or a group of antenna ports.

In the embodiments of the present disclosure, there is a first correspondence between the antenna port indication information and each antenna port, and the first correspondence is predefined, or is configured and indicated to the terminal by the network device.

The transmitting the indication information to the terminal by using the dynamic signaling includes: transmitting the first set of antenna port indication information to the terminal; and transmitting the first index to the terminal by using the dynamic signaling, where the first index is configured to indicate the antenna port indication information in the first set as the target indication information.

Further, the operation further includes: when the first set of antenna port indication information is transmitted to the terminal, transmitting, to the terminal through the transceiver, resource identification information corresponding to the reference signal and related to the first set.

The resource identification information is implicitly indicated by location information of a resource related to the reference signal in a signaling configuration.

In an embodiment of the present disclosure, the determining indication information related to one or more antennas includes: receiving, by the transceiver, first information from a terminal; and determining antenna port indication information of the reference signal according to the first information, where the first information includes at least one of channel state information (CSI) and preference information related to an antenna port of the reference signal, and the CSI is measurement reporting information for the target resource.

The preference information includes: a preferred channel state information-reference signal (CSI-RS) antenna port configuration information.

In this embodiment of the present disclosure, the CSI includes CSIs corresponding to different antenna ports.

There is an association relationship between the antenna port indication information corresponding to the bandwidth part BWPs.

In the embodiments of the present disclosure, the association relationship includes that at least a part of the contents are same.

The indication information is resource identification information of a reference signal.

In the embodiments of the present disclosure, the transmitting the indication information to the terminal by using the dynamic signaling includes: transmitting the second set of the resource identification information to the terminal; and transmitting the second index to the terminal by using the dynamic signaling, where the second index is configured to indicate the resource identification information in the second set as the target identification information.

The indication information is transmission power information of a reference signal.

In the embodiments of the present disclosure, the determining the indication information related to the one or more antennas includes: receiving, by the transceiver, the preferred power backoff information from the terminal; and determining the transmission power information of the reference signal according to the preferred power backoff information.

The reference signal is a channel state information reference signal (CSI-RS).

In this embodiment of the present disclosure, the resource corresponding to the CSI-RS is: at least one CSI-RS resource in the channel state information resource configuration CSI-ResourceConfig associated with the channel state information report configuration CSI-ReportConfig.

It should be noted that, the above-mentioned network device provided in the embodiments of the present disclosure can implement all method steps implemented by the above-mentioned method embodiment at the network device side, and can achieve the same technical effect, which will not be repeated here for the same parts and beneficial effects as the method embodiments in this embodiment.

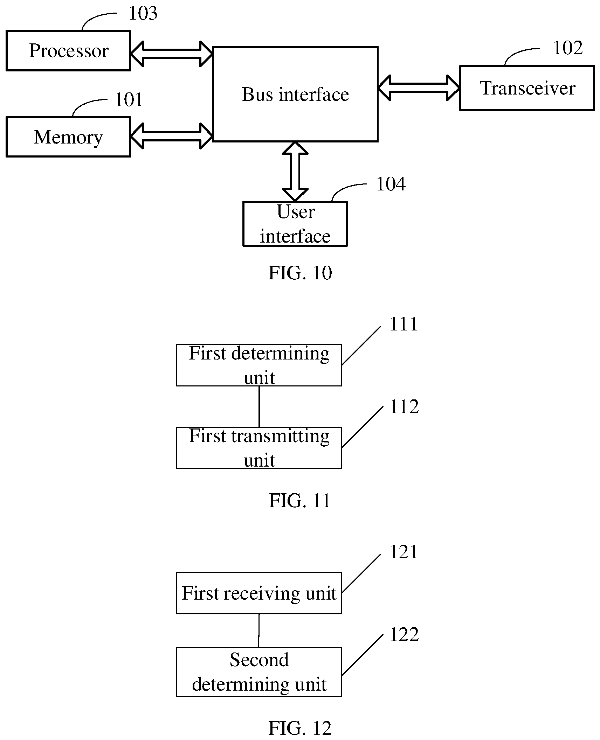

An embodiment of the present disclosure further provides a terminal, as shown in FIG. 10, including a memory 101, a transceiver 102, and a processor 103.

The memory 101 is configured to store a computer program; tie transceiver 102 is configured to transmit and receive data under control of the processor 103; and the processor 103 is configured to read the computer program in the memory 101 and perform the following operations:

receiving, by the transceiver 102, indication information related to one or more antennas from a network device through dynamic signaling; and

determining state information related to the one or more antennas according to the indication information.

The terminal provided in this embodiment of the present disclosure receives indication information related to one or more antennas from a network device through dynamic signaling and determines the state information related to the one or more antennas according to the indication information; so that the base station can perform scheduling according to the latest reported information of the terminal, avoid affecting the continuity of the transmission service and the increased delay, and achieve matching of the service load and the actual transmission environment. On the premise that better service is provided for the terminal, the energy consumption of the network (for example, the base station) is better reduced; the problem that the service continuity cannot be guaranteed, the user experience is poor, and the optimal energy-saving effect cannot be achieved in the energy-saving information processing solution in the prior art is well solved.

Specifically, the transceiver 102 is configured to receive and transmit data under the control of the processor 103.

In FIG. 10, the bus architecture may include any number of interconnected buses and bridges, and specifically, various circuits of one or more processors represented by the processor 103 and a memory represented by the memory 101 are linked together. The bus architecture may also link various other circuits, such as a peripheral device, a voltage regulator, and a power management circuit, which are well known in the art, and therefore are not further described herein. The bus interface provides an interface. The transceiver 102 may be a plurality of elements, that is, includes a transmitter and a receiver, and provides units for communicating with various other apparatuses on a transmission medium, where the transmission mediums include transmission media such as a wireless channel, a wired channel, and an optical cable. For different user equipment, the user interface 104 may also be an interface capable of being externally connected to an internal required device, and the connected device includes but is not limited to a keypad, a display, a speaker, a microphone, a joystick, and the like.

The processor 103 is responsible for managing the bus architecture and general processing, and the memory 101 may store data used by the processor 103 when performing operations.

Optionally, the processor 103 may be a CPU, an Application Specific Integrated Circuit (ASIC), a Field-Programmable Gate Array (FPGA), or a Complex Programmable Logic Device (CPLD), and the processor may also use a multi-core architecture.

The processor is configured to invoke the computer program stored in the memory, to perform any one of the methods provided in the embodiments of the present disclosure according to the obtained executable instruction. The processor and the memory may also be physically separated.

The indication information is antenna port indication information of a reference signal; and the determining state information related to one or more antennas according to the indication information includes: determining state information of an antenna port of the reference signal according to antenna port indication information of the reference signal.

In the embodiments of the present disclosure, the resource corresponding to the antenna port indication information is determined according to first predefined information or configuration from the network device.

The antenna port indication information is configured to indicate at least one of port activation information and port deactivation information.

In this embodiment of the present disclosure, the receiving indication information related to the one or more antennas from the network device through the dynamic signaling includes at least one of following: receiving the antenna port indication information from the network device by using the terminal-specific dynamic signaling; and receiving the antenna port indication information from the network device by using the group common dynamic signaling.

The antenna port indication information is bitmap indication information, where an indication granularity of the bitmap indication information is an antenna port or a group of antenna ports; and the determining state information of an antenna port of the reference signal according to the antenna port indication information of the reference signal includes: determining state information of one antenna port or a group of antenna ports of the reference signal according to the bitmap indication information.

In this embodiment of the present disclosure, there is a first correspondence between the antenna port indication information and antenna ports, and the first correspondence is predefined, or is configured and indicated by the network device; the determining state information of one antenna port or a group of antenna ports of the reference signal according to the bitmap indication information includes: determining state information of one antenna port or a group of antenna ports of the reference signal according to the bitmap indication information and the first correspondence.

Receiving the indication information related to one or more antennas from the network device through the dynamic signaling includes: receiving a first set of antenna port indication information from a network device; receiving a first index from the network device by using dynamic signaling; and obtaining antenna port indication information as target indication information according to the first set and the first index, where the first index is configured to indicate antenna port indication information in the first set as target indication information.

Further, the operation further includes: when receiving the first set of antenna port indication information from the network device, receiving, from the network device by using the transceiver, resource identification information related to the reference signal and corresponding to the first set; the obtaining the antenna port indication information as the target indication information according to the first set and the first index includes: obtaining the antenna port indication information as the target indication information according to the first set, the first index and the resource identification information.

The resource identification information is implicitly indicated by location information of a resource related to the reference signal in a signaling configuration.

Further, the operation further includes: before receiving indication information related to one or more antennas from a network device through dynamic signaling, transmitting first information to the network device by using the transceiver, where the first information includes at least one of channel state information CSI and preference information related to an antenna port of the reference signal, and the CSI is measurement reporting information for the target resource.

The preference information includes: a preferred channel state information-reference signal (CSI-RS) antenna port configuration information.

In this embodiment of the present disclosure, the CSI includes CSI corresponding to different antenna ports.

There is an association relationship between the antenna port indication information corresponding to the bandwidth part BWPs.

In the embodiments of the present disclosure, the association relationship includes that at least a part of the contents are same.

The indication information is resource identification information of a reference signal; and the determining state information related to one or more antennas according to the indication information includes: determining state information of a corresponding resource of the reference signal according to the resource identification information.

In the embodiments of the present disclosure, the receiving indication information related to one or more antennas from a network device by using dynamic signaling includes: receiving a second set of resource identification information from a network device through dynamic signaling; receiving a second index from the network device by using dynamic signaling; and obtaining resource identification information as target identification information according to the second set and the second index, where the second index is configured to indicate resource identification information in the second set as target identification information.

The indication information is the transmission power information of the reference signal; and determining the state information related to the one or more antennas according to the indication information includes: determining the transmission power of the corresponding resource of the reference signal according to the transmission power information.

Further, the operation further includes: before receiving the indication information related to the one or more antennas from the network device by using the dynamic signaling, transmitting, to the network device by using the transceiver, the power backoff information that is preferred by the terminal.

In the embodiments of the present disclosure, the operation further includes: after receiving the indication information related to the one or more antennas from the network device by using the dynamic signaling, not receiving the resource indicated by the indication information as unavailable or muting resources.

The reference signal is a channel state information reference signal (CSI-RS).

In this embodiment of the present disclosure, the resource corresponding to the CSI-RS is: at least one CSI-RS resource in the channel state information resource configuration CSI-ResourceConfig associated with the channel state information report configuration CSI-ReportConfig.

The state information related to the one or more antennas includes at least one of activation state information or deactivation state information of the antenna port, activation state information or deactivation state information of a corresponding resource of the reference signal, and transmission power of a corresponding resource of the reference signal.

It should be noted that the above-mentioned terminal provided in the embodiments of the present disclosure can implement all method steps implemented by the above-mentioned method embodiment at the terminal side, and can achieve the same technical effect, which will not be specifically described in detail in this embodiment and some of the beneficial effects that are the same as those in the method embodiment.

An embodiment of the present disclosure further provides an information processing apparatus, applied to a network device, as shown in FIG. 11, including:
a first determining unit 111, configured to determine indication information related to one or more antennas; and
a first transmitting unit 112, configured to transmit the indication information to a terminal by using dynamic signaling; and
the indication information is used for energy-saving of the network device.

The information processing apparatus provided in the embodiments of the present disclosure determines indication information related to one or more antennas; and transmits the indication information to the terminal by using dynamic signaling; wherein the indication information is used for energy-saving of the network device; so that the base station can perform scheduling according to the latest reported information of the terminal, avoid affecting the continuity of the transmission service, the increased delay, and achieve matching of the service load and the actual transmission environment On the premise that better service is provided for the terminal, the energy consumption of the network (for example, the base station) is better reduced; the problem that the service continuity cannot be guaranteed, the user experience is poor, and the optimal energy-saving effect cannot be achieved in the energy-saving information processing solution in the prior art is well solved.

The indication information is antenna port indication information of a reference signal.

In the embodiments of the present disclosure, the resource corresponding to the antenna port indication information is determined according to first predefined information or configuration of the network device.

The antenna port indication information is configured to indicate at least one of port activation information and port deactivation information.

In this embodiment of the present disclosure, the transmitting the indication information to the terminal by using the dynamic signaling includes at least one of following: transmitting the antenna port indication information to the terminal by using the terminal-specific dynamic signaling; and transmitting the antenna port indication information to the terminal by using the group common dynamic signaling.

The antenna port indication information is bitmap indication information, where an indication granularity of the bitmap indication information is one antenna port or a group of antenna ports.

In the embodiments of the present disclosure, there is a first correspondence between the antenna port indication information and the antenna ports, and the first correspondence is predefined, or is configured and indicated to the terminal by the network device.

The transmitting the indication information to the terminal by using the dynamic signaling includes: transmitting the first set of antenna port indication information to the terminal; and transmitting the first index to the terminal by using the dynamic signaling, where the first index is configured to indicate the antenna port indication information in the first set as the target indication information.

Further, the information processing apparatus further includes: a second transmitting unit, configured to transmit, to the terminal, resource identification information related to the reference signal corresponding to the first set when the first set of antenna port indication information is transmitted to the terminal.

The resource identification information is implicitly indicated by location information of a resource related to the reference signal in a signaling configuration.

In an embodiment of the present disclosure, the determining indication information related to one or more antennas includes: receiving first information from a terminal; and determining antenna port indication information of a reference signal according to the first information, where the first information includes at least one of channel state information (CSI) and preference information related to an antenna port of a reference signal, and the CSI is measurement report information for a target resource.

The preference information includes: preferred channel state information-reference signal (CSI-RS) antenna port configuration information.

In this embodiment of the present disclosure, the CSI includes CSIs corresponding to different antenna ports.

There is an association relationship between the antenna port indication information corresponding to each part of bandwidth BWPs.

In the embodiments of the present disclosure, the association relationship includes that at least a part of the contents are same.

The indication information is resource identification information of a reference signal.

In the embodiments of the present disclosure, the transmitting the indication information to the terminal by using the dynamic signaling includes: transmitting the second set of the resource identification information to the terminal; and transmitting the second index to the terminal by using the dynamic signaling, where the second index is configured to indicate the resource identification information in the second set as the target identification information.

The indication information is transmission power information of a reference signal.

In the embodiments of the present disclosure, the determining the indication information related to the one or more antennas includes: receiving the preferred power backoff information from the terminal; and determining the transmission power information of the reference signal according to the preferred power backoff information.

The reference signal is a channel state information reference signal (CSI-RS).

In this embodiment of the present disclosure, the resource corresponding to the CSI-RS is: at least one CSI-RS resource in the channel state information resource configuration CSI-ResourceConfig associated with the channel state information report configuration CSI-ReportConfig.

It should be noted that, the above apparatus provided in the embodiments of the present disclosure can implement all method steps implemented by the foregoing network device side method embodiment, and can achieve the same technical effect, and details of the same parts and beneficial effects as those in the method embodiments in this embodiment are not described herein again.

An embodiment of the present disclosure further provides an information processing apparatus, applied to a terminal, as shown in FIG. 12, including:
a first receiving unit 121, configured to receive indication information related to one or more antennas from a network device through dynamic signaling;
a second determining unit 122 is configured to determine state information related to the one or more antennas according to the indication information.

The information processing apparatus provided in the embodiments of the present disclosure receives indication information related to one or more antennas from a network device through dynamic signaling; state information related to the one or more antennas is determined according to the indication information; so that the base station can perform scheduling according to the latest reported information of the terminal, avoid affecting the continuity of the transmission service, the increased delay, and achieve matching of the service load and the actual transmission environment. On the premise that a better service is provided for the terminal, the energy consumption of the network (for example, the base station) is better reduced; the problem that the service continuity cannot be guaranteed, the user experience is poor, and the optimal energy-saving effect cannot be achieved in the energy-saving information processing scheme in the prior art is well solved.

The indication information is antenna port indication information of a reference signal; and the determining state information related to one or more antennas according to the indication information includes: determining state information of an antenna port of the reference signal according to antenna port indication information of the reference signal.

In the embodiments of the present disclosure, the resource corresponding to the antenna port indication information is determined according to first predefined information or configuration of the network device.

The antenna port indication information is configured to indicate at least one of port activation information and port deactivation information.

In this embodiment of the present disclosure, the receiving indication information related to the one or more antennas from the network device through the dynamic signaling includes at least one of following: receiving the antenna port indication information from the network device by using the terminal-specific dynamic signaling; and receiving the antenna port indication information from the network device by using the group common dynamic signaling.

The antenna port indication information is bitmap indication information, where an indication granularity of the bitmap indication information is an antenna port or a group of antenna ports; and the determining state information of an antenna port of the reference signal according to the antenna port indication information of the reference signal includes: determining state information of one antenna port or a group of antenna ports of the reference signal according to the bitmap indication information.

In this embodiment of the present disclosure, there is a first correspondence between the antenna port indication information and the antenna ports, and the first correspondence is predefined, or is configured and indicated by the network device; the determining state information of one antenna port or a group of antenna ports of the reference signal according to the bitmap indication information includes: determining state information of one antenna port or a group of antenna ports of the reference signal according to the bitmap indication information and the first correspondence.

Receiving the indication information related to one or more antennas from the network device through dynamic signaling includes: receiving a first set of antenna port indication information from a network device; receiving a first index from the network device by using dynamic signaling; and obtaining antenna port indication information as target indication information according to the first set and the first index, where the first index is configured to indicate antenna port indication information in the first set as target indication information.

Further, the information processing apparatus further includes: a second receiving unit, configured to receive, when receiving the first set of antenna port indication information from the network device, resource identification information corresponding to the reference signal and corresponding to the first set from the network device; the obtaining the antenna port indication information as the target indication information according to the first set and the first index includes: obtaining the antenna port indication information as the target indication information according to the first set, the first index and the resource identification information.

The resource identification information is implicitly indicated by location information of a resource related to the reference signal in a signaling configuration.

In the embodiments of the present disclosure, the information processing apparatus further includes: a third transmitting unit, configured to transmit first information to the network device before receiving the indication information related to the one or more antennas from the network device through the dynamic signaling, where the first information includes at least one of channel state information CSI and preference information related to an antenna port of the reference signal, and the CSI is measurement reporting information for the target resource.

The preference information includes: a preferred channel state information-reference signal (CSI-RS) antenna port configuration information.

In this embodiment of the present disclosure, the CSI includes CSIs corresponding to different antenna ports.

There is an association relationship between the antenna port indication information corresponding to bandwidth parts BWPs.

In the embodiments of the present disclosure, the association relationship includes that at least a part of the contents are same.

The indication information is resource identification information of a reference signal; and the determining the state information related to one or more antennas according to the indication information includes: determining state information of a corresponding resource of the reference signal according to the resource identification information.

In the embodiments of the present disclosure, the receiving the indication information related to one or more antennas from a network device by using dynamic signaling includes: receiving a second set of resource identification information from a network device through dynamic signaling; receiving a second index from the network device by using dynamic signaling; and obtaining the resource identification information as target identification information according to the second set and the second index, where the second index is configured to indicate resource identification information in the second set as target identification information.

The indication information is the transmission power information of the reference signal; and determining the state information related to the one or more antennas according to the indication information includes: determining the transmission power of the corresponding resource of the reference signal according to the transmission power information.

Further, the information processing apparatus further includes: a fourth transmitting unit, configured to transmit the power backoff information preferred by the terminal to the network device before receiving the indication information related to the one or more antennas from the network device through the dynamic signaling.

In this embodiment of the present disclosure, the information processing apparatus further includes: a first processing unit, configured to, after receiving the indication information related to the one or more antennas from the network device by using the dynamic signaling, skip receiving the resource indicated as an unavailable or muting resource by the indication information.

The reference signal is a channel state information reference signal (CSI-RS).

In this embodiment of the present disclosure, the resource corresponding to the CSI-RS is: at least one CSI-RS resource in the channel state information resource configuration CSI-ResourceConfig associated with the channel state information report configuration CSI-ReportConfig.

The state information related to the one or more antennas includes at least one of activation state information or deactivation state information of the antenna port, activation state information or deactivation state information of a corresponding resource of the reference signal, and transmission power of a corresponding resource of the reference signal.

It should be noted that, the above apparatus provided in the embodiments of the present disclosure can implement all method steps implemented by the above terminal side method embodiment, and can achieve the same technical effect, which will not be repeated here for the same parts and beneficial effects as the method embodiments in this embodiment.

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solution of the present disclosure essentially or all or part of the technical solution that contributes to the prior art may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program code, such as a USB flash drive, a removable hard disk, a read-only memory (ROM), a random access memory (RAM), a magnetic disk, or an optical disk.

An embodiment of the present disclosure further provides a processor-readable storage medium, where the processor-readable storage medium stores a computer program, and the computer program is configured to cause the processor to execute the information processing method on the network device side; or the processor-readable storage medium stores a computer program, and the computer program is configured to cause the processor to perform the information processing method on the terminal side.

The processor-readable storage medium may be any usable medium or data storage device accessible by a processor, including but not limited to a magnetic memory (for example, a floppy disk, a hard disk, a magnetic tape, a magneto-optical disk (MO), etc.), an optical memory (for example, a compact disk (CD), a digital video disk (DVD), a Blu-ray disk (BD), a high-definition versatile disk (HVD), etc.), and a semiconductor memory (for example, a ROM, An Electrically Programmable Read-Only Memory (EPROM), an Electrically Erasable Programmable Read-Only Memory (EEPROM), a non-volatile memory (NAND Flash), a Solid State Hard Disk (SSD)), etc.

The implementation embodiments of the information processing method on the network device side or the terminal side are all applicable to the information processing apparatus in the network device side, and can also achieve the same technical effect.

A person skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Moreover, the present disclosure may use a form of a computer program product implemented on one or more computer-usable storage media (including but not limited to a disk memory, an optical memory, and the like) including computer-usable program codes.

The present disclosure is described with reference to the flowcharts and/or block diagrams of the method, the device (system), and the computer program product according to the embodiments of the present disclosure. It should be understood that each process and/or block in the flowcharts and/or block diagrams and a combination of processes and/or blocks in the flowcharts and/or block diagrams may be implemented by computer-executable instructions. These computer-executable instructions may be provided to a processor of a general-purpose computer, a special-purpose computer, an embedded processor, or other programmable data processing devices to generate a machine, so that the instructions executed by the processor of the computer or other programmable data processing devices generate means for implementing the functions specified in one or more flows of the flowcharts and/or one or more blocks in the block diagrams.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing device such that a series of operational steps are performed on the computer or other programmable device to produce a computer-implemented process, such that the instructions executed on the computer or other programmable device provide steps for implementing the functions specified in one or more flows of the flowchart and/or one or more blocks of the block diagram.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present disclosure.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

Evidently those skilled in the art can make various modifications and variations to the disclosure without departing from the spirit and scope of the disclosure. In this way, if these modifications and variations of the present disclosure fall within the scope of the claims of the present disclosure and their equivalent technologies, the present disclosure is also intended to include these modifications and variations.

## Claims

1. An information processing method applied to a network device, the method comprising:
determining indication information related to one or more antennas;
transmitting the indication information to a terminal by using dynamic signaling; wherein the indication information is used for energy-saving of the network device.

2. The information processing method according to claim 1, wherein the indication information is antenna port indication information of a reference signal.

3. The information processing method according to claim 2, wherein a resource corresponding to the antenna port indication information is determined according to first predefined information or network device configuration.

4. The information processing method according to claim 2, wherein the antenna port indication information is configured to indicate at least one of port activation information and port deactivation information.

5. The information processing method according to claim 2, wherein transmitting the indication information to the terminal by using the dynamic signaling comprises at least one of following:
transmitting the antenna port indication information to the terminal by using terminal-specific dynamic signaling; and
transmitting the antenna port indication information to the terminal by using group common dynamic signaling.

6. The information processing method according to claim 2 or 4, wherein the antenna port indication information is bitmap indication information;
an indication granularity of the bitmap indication information is one antenna port or one group of antenna ports.

7. The information processing method according to claim 6, wherein there is a first correspondence between the antenna port indication information and each antenna port, and the first correspondence is predefined, or is configured and indicated to the terminal by the network device.

8. The information processing method according to claim 2, wherein transmitting the indication information to the terminal by using the dynamic signaling comprises:
transmitting a first set of antenna port indication information to the terminal;
transmitting a first index to the terminal by using the dynamic signaling;
wherein the first index is configured to indicate antenna port indication information as target indication information in the first set.

9. The information processing method according to claim 8, wherein when transmitting the first set of antenna port indication information to the terminal, the method further comprises:
transmitting, to a terminal, resource identification information related to the reference signal and corresponding to the first set.

10. The information processing method according to claim 9, wherein the resource identification information is implicitly indicated by location information of a resource related to the reference signal in a signaling configuration.

11. The information processing method according to claim 2, wherein determining the indication information related to the one or more antennas comprises:
receiving first information from a terminal;
determining the antenna port indication information of the reference signal according to the first information; wherein
the first information comprises at least one of following: channel state information (CSI), and preference information related to an antenna port of the reference signal;
the CSI is measurement reporting information for a target resource.

12. The information processing method according to claim 11, wherein the preference information comprises: preferred antenna port configuration information of a channel state information-reference signal (CSI-RS).

13. The information processing method according to claim 11, wherein the CSI comprises CSI corresponding to different antenna ports.

14. The information processing method according to claim 2 or 8, wherein there is an association relationship among the antenna port indication information corresponding to different bandwidth parts (BWPs).

15. The information processing method according to claim 14, wherein the association relationship comprises that at least part of contents is same.

16. The information processing method according to claim 1, wherein the indication information is resource identification information of a reference signal.

17. The information processing method according to claim 16, wherein transmitting the indication information to the terminal by using the dynamic signaling comprises:
transmitting a second set of the resource identification information to the terminal; and
transmitting a second index to the terminal by using the dynamic signaling;
wherein the second index is configured to indicate the resource identification information as target identification information in the second set.

18. The information processing method according to claim 1, wherein the indication information is transmission power information of a reference signal.

19. The information processing method according to claim 18, wherein determining the indication information related to the one or more antennas comprises:
receiving preferred power backoff information from the terminal;
determining the transmission power information of the reference signal according to the preferred power backoff information.

20. The information processing method according to any one of claims 1 to 19, wherein the reference signal is a channel state information reference signal (CSI-RS).

21. The information processing method according to claim 20, wherein a resource corresponding to the CSI-RS is: at least one CSI-RS resource in CSI resource configuration CSI-ResourceConfig associated with a CSI report configuration CSI-ReportConfig.

22. An information processing method applied to a terminal, the method comprising:
receiving indication information related to one or more antennas from a network device through dynamic signaling;
determining state information related to the one or more antennas according to the indication information.

23. The information processing method according to claim 22, wherein the indication information is antenna port indication information of a reference signal;
determining the state information related to the one or more antennas according to the indication information comprises:
determining the state information of the antenna port of the reference signal according to the antenna port indication information of the reference signal.

24. The information processing method according to claim 23, wherein the resource corresponding to the antenna port indication information is determined according to first predefined information or network device configuration.

25. The information processing method according to claim 23, wherein the antenna port indication information is configured to indicate at least one of port activation information and port deactivation information.

26. The information processing method according to claim 23, wherein receiving the indication information related to the one or more antennas from the network device through the dynamic signaling comprises at least one of following:
receiving the antenna port indication information from the network device by using terminal-specific dynamic signaling;
receiving the antenna port indication information from the network device by using group common dynamic signaling.

27. The information processing method according to claim 23 or 25, wherein the antenna port indication information is bitmap indication information;
an indication granularity of the bitmap indication information is one antenna port or one group of antenna ports;
determining the state information of the antenna port of the reference signal according to the antenna port indication information of the reference signal comprises:
determining the state information of one antenna port or a group of antenna ports of the reference signal according to the bitmap indication information.

28. The information processing method according to claim 27, wherein there is a first correspondence between the antenna port indication information and each antenna port, and the first correspondence is predefined, or is configured and indicated by the network device;
determining the state information of the one antenna port or the group of antenna ports of the reference signal according to the bitmap indication information comprises:
determining the state information of the one antenna port or the group of antenna ports of the reference signal according to the bitmap indication information and the first correspondence.

29. The information processing method according to claim 23, wherein the receiving the indication information related to the one or more antennas from the network device through the dynamic signaling comprises:
receiving a first set of antenna port indication information from the network device;
receiving a first index from the network device by using the dynamic signaling;
obtaining antenna port indication information as target indication information according to the first set and the first index; wherein
the first index is configured to indicate the antenna port indication information as the target indication information in the first set.

30. The information processing method according to claim 29, wherein when receiving the first set of the antenna port indication information from the network device, the method further comprises:
receiving, from the network device, resource identification information related to the reference signal and corresponding to the first set;
obtaining the antenna port indication information as the target indication information according to the first set and the first index comprises:
obtaining the antenna port indication information as the target indication information according to the first set, the first index, and the resource identification information.

31. The information processing method according to claim 30, wherein the resource identification information is implicitly indicated by location information of a resource related to the reference signal in a signaling configuration.

32. The information processing method according to claim 23, wherein before receiving the indication information related to the one or more antennas from the network device through the dynamic signaling, the method further comprises:
transmitting first information to the network device; wherein
the first information comprises at least one of following: channel state information (CSI), and preference information related to an antenna port of the reference signal;
the CSI is measurement reporting information for a target resource.

33. The information processing method according to claim 32, wherein the preference information comprises: preferred antenna port configuration information of a channel state information-reference signal (CSI-RS).

34. The information processing method according to claim 32, wherein the CSI comprises CSI corresponding to different antenna ports.

35. The information processing method according to claim 23 or 29, wherein there is an association relationship among the antenna port indication information corresponding to different bandwidth parts (BWPs).

36. The information processing method according to claim 35, wherein the association relationship comprises that at least part of contents is same.

37. The information processing method according to claim 22, wherein the indication information is resource identification information of a reference signal;
determining the state information related to the one or more antennas according to the indication information comprises:
determining the state information of a corresponding resource of the reference signal according to the resource identification information.

38. The information processing method according to claim 37, wherein receiving the indication information related to the one or more antennas from the network device through the dynamic signaling comprises:
receiving a second set of the resource identification information from the network device through the dynamic signaling;
receiving a second index from the network device through the dynamic signaling;
obtaining the resource identification information as target identification information according to the second set and the second index; wherein
the second index is configured to indicate the resource identification information as target identification information in the second set.

39. The information processing method according to claim 22, wherein the indication information is transmission power information of a reference signal;
determining the state information related to the one or more antennas according to the indication information comprises:
determining a transmission power of a corresponding resource of the reference signal according to the transmission power information.

40. The information processing method according to claim 39, wherein before receiving the indication information related to the one or more antennas from the network device through the dynamic signaling, the method further comprises:
transmitting preferred power backoff information of the terminal to the network device.

41. The information processing method according to claim 22, wherein after receiving the indication information related to the one or more antennas from the network device through the dynamic signaling, the method further comprises:
not receiving a resource which is indicated as an unavailable resource or a muting resource by the indication information.

42. The information processing method according to any one of claims 22 to 41, wherein the reference signal is a channel state information reference signal (CSI-RS).

43. The information processing method according to claim 42, wherein a resource corresponding to the CSI-RS is: at least one CSI-RS resource in CSI resource configuration CSI-ResourceConfig associated with a CSI report configuration CSI-ReportConfig.

44. A network device, comprising:
a memory, a transceiver, and a processor,
wherein the memory is configured to store a computer program; the transceiver is configured to transmit and receive data under the control of the processor; and the processor is configured to read the computer program in the memory and execute the information processing method according to any one of claims 1 to 21.

45. A terminal, comprising:
a memory, a transceiver, and a processor,
wherein the memory is configured to store a computer program; the transceiver is configured to transmit and receive data under the control of the processor; and the processor is configured to read the computer program in the memory and execute the information processing method according to any one of claims 22 to 43.

46. An information processing apparatus applied to a network device, the apparatus comprising:
a first determining unit, configured to determine indication information related to one or more antennas;
a first transmitting unit, configured to transmit the indication information to a terminal by using dynamic signaling; wherein the indication information is used for energy-saving of the network device.

47. The information processing apparatus according to claim 46, wherein the indication information is antenna port indication information of a reference signal.

48. The information processing apparatus according to claim 47, wherein a resource corresponding to the antenna port indication information is determined according to first predefined information or network device configuration.

49. The information processing apparatus according to claim 47, wherein the antenna port indication information is configured to indicate at least one of port activation information and port deactivation information.

50. The information processing apparatus according to claim 47, wherein the first transmitting unit is specifically configured to perform at least one of following:
transmitting the antenna port indication information to the terminal by using terminal-specific dynamic signaling;
transmitting the antenna port indication information to the terminal by using group common dynamic signaling.

51. The information processing apparatus according to claim 47 or 49, wherein the antenna port indication information is bitmap indication information;
an indication granularity of the bitmap indication information is one antenna port or one group of antenna ports.

52. The information processing apparatus according to claim 51, wherein there is a first correspondence between the antenna port indication information and each antenna port, and the first correspondence is predefined, or is configured and indicated to the terminal by the network device.

53. The information processing apparatus according to claim 47, wherein the first transmitting unit is specifically configured to:
transmit a first set of antenna port indication information to the terminal;
transmit a first index to the terminal by using the dynamic signaling;
wherein the first index is configured to indicate antenna port indication information as target indication information in the first set.

54. The information processing apparatus according to claim 53, wherein when transmitting the first set of antenna port indication information to the terminal, the apparatus further comprises:
a second transmitting unit, configured to transmit, to the terminal, resource identification information related to the reference signal and corresponding to the first set.

55. The information processing apparatus according to claim 54, wherein the resource identification information is implicitly indicated by location information of a resource related to the reference signal in a signaling configuration.

56. The information processing apparatus according to claim 47, wherein the first determining unit is specifically configured to:
receive first information from a terminal;
determine the antenna port indication information of the reference signal according to the first information; wherein
the first information comprises at least one of following: channel state information (CSI), and preference information related to an antenna port of the reference signal;
the CSI is measurement reporting information for a target resource.

57. The information processing apparatus according to claim 56, wherein the preference information comprises: preferred antenna port configuration information of a channel state information-reference signal (CSI-RS).

58. The information processing apparatus according to claim 56, wherein the CSI comprises CSI corresponding to different antenna ports.

59. The information processing apparatus according to claim 47 or 53, wherein there is an association relationship among the antenna port indication information corresponding to different bandwidth parts (BWPs).

60. The information processing apparatus according to claim 59, wherein the association relationship comprises that at least part of contents is same.

61. The information processing apparatus according to claim 1, wherein the indication information is resource identification information of a reference signal.

62. The information processing apparatus according to claim 61, wherein the first transmitting unit is specifically configured to:
transmit a second set of the resource identification information to the terminal; and
transmit a second index to the terminal by using the dynamic signaling;
wherein the second index is configured to indicate the resource identification information as target identification information in the second set.

63. The information processing apparatus according to claim 46, wherein the indication information is transmission power information of a reference signal.

64. The information processing apparatus according to claim 63, wherein the first determining unit is specifically configured to:
receive preferred power backoff information from the terminal;
determine the transmission power information of the reference signal according to the preferred power backoff information.

65. The information processing apparatus according to any one of claims 46 to 64, wherein the reference signal is a channel state information reference signal (CSI-RS).

66. The information processing apparatus according to claim 65, wherein a resource corresponding to the CSI-RS is: at least one CSI-RS resource in CSI resource configuration CSI-ResourceConfig associated with a CSI report configuration CSI-ReportConfig.

67. An information processing apparatus applied to a terminal, the apparatus comprising:
a first receiving unit, configured to receive indication information related to one or more antennas from a network device through dynamic signaling; and
a second determining unit, configured to determine state information related to the one or more antennas according to the indication information.

68. The information processing apparatus according to claim 67, wherein the indication information is antenna port indication information of a reference signal;
the second determining unit is specifically configured to:
determine the state information of the antenna port of the reference signal according to the antenna port indication information of the reference signal.

69. The information processing apparatus according to claim 68, wherein the resource corresponding to the antenna port indication information is determined according to first predefined information or network device configuration.

70. The information processing apparatus according to claim 68, wherein the antenna port indication information is configured to indicate at least one of port activation information and port deactivation information.

71. The information processing apparatus according to claim 68, wherein the first receiving unit is specifically configured to perform at least one of following:
receiving the antenna port indication information from the network device by using terminal-specific dynamic signaling;
receiving the antenna port indication information from the network device by using group common dynamic signaling.

72. The information processing apparatus according to claim 68 or 70, wherein the antenna port indication information is bitmap indication information;
an indication granularity of the bitmap indication information is one antenna port or one group of antenna ports;
the second determining unit is specifically configured to:
determine the state information of one antenna port or a group of antenna ports of the reference signal according to the bitmap indication information.

73. The information processing apparatus according to claim 72, wherein there is a first correspondence between the antenna port indication information and each antenna port, and the first correspondence is predefined, or is configured and indicated by the network device;
the second determining unit is specifically configured to:
determine the state information of the one antenna port or the group of antenna ports of the reference signal according to the bitmap indication information and the first correspondence.

74. The information processing apparatus according to claim 68, wherein the first receiving unit is specifically configured to:
receive a first set of antenna port indication information from the network device;
receive a first index from the network device by using the dynamic signaling;
obtain antenna port indication information as target indication information according to the first set and the first index; wherein
the first index is configured to indicate the antenna port indication information as the target indication information in the first set.

75. The information processing apparatus according to claim 74, wherein when receiving the first set of the antenna port indication information from the network device, the apparatus further comprises:
a second receiving unit, configured to receive, from the network device, resource identification information related to the reference signal and corresponding to the first set;
the first receiving unit is further configured to:
obtain the antenna port indication information as the target indication information according to the first set, the first index, and the resource identification information.

76. The information processing apparatus according to claim 75, wherein the resource identification information is implicitly indicated by location information of a resource related to the reference signal in a signaling configuration.

77. The information processing apparatus according to claim 68, wherein the apparatus further comprises:
a third transmitting unit, configured to transmit first information to the network device before receiving the indication information related to the one or more antennas from the network device through the dynamic signaling; wherein
the first information comprises at least one of following: channel state information (CSI), and preference information related to an antenna port of the reference signal;
the CSI is measurement reporting information for a target resource.

78. The information processing apparatus according to claim 77, wherein the preference information comprises: preferred antenna port configuration information of a channel state information-reference signal (CSI-RS).

79. The information processing apparatus according to claim 77, wherein the CSI comprises CSI corresponding to different antenna ports.

80. The information processing apparatus according to claim 68 or 74, wherein there is an association relationship among the antenna port indication information corresponding to different bandwidth parts (BWPs).

81. The information processing apparatus according to claim 80, wherein the association relationship comprises that at least part of contents is same.

82. The information processing apparatus according to claim 67, wherein the indication information is resource identification information of a reference signal;
the second determining unit is specifically configured to:
determine the state information of a corresponding resource of the reference signal according to the resource identification information.

83. The information processing apparatus according to claim 82, wherein the first receiving unit is specifically configured to:
receive a second set of the resource identification information from the network device through the dynamic signaling;
receive a second index from the network device through the dynamic signaling;
obtain the resource identification information as target identification information according to the second set and the second index; wherein the second index is configured to indicate the resource identification information as target identification information in the second set.

84. The information processing apparatus according to claim 67, wherein the indication information is transmission power information of a reference signal;
the second determining unit is specifically configured to: determine a transmission power of a corresponding resource of the reference signal according to the transmission power information.

85. The information processing apparatus according to claim 84, wherein the apparatus further comprises:
a fourth transmitting unit, configured to transmit preferred power backoff information of the terminal to the network device before receiving the indication information related to the one or more antennas from the network device through the dynamic signaling.

86. The information processing apparatus according to claim 67, wherein the apparatus further comprises:
a first processing unit configured to not receive a resource which is indicated as an unavailable resource or a muting resource by the indication information.

87. The information processing apparatus according to any one of claims 67 to 86, wherein the reference signal is a channel state information reference signal (CSI-RS).

88. The information processing apparatus according to claim 87, wherein a resource corresponding to the CSI-RS is: at least one CSI-RS resource in CSI resource configuration CSI-ResourceConfig associated with a CSI report configuration CSI-ReportConfig.

89. A processor-readable storage medium, wherein the processor-readable storage medium stores a computer program, and the computer program is configured to cause a processor to execute the information processing method according to any one of claims 1 to 21; or
the processor-readable storage medium stores a computer program, and the computer program is configured to cause a processor to execute the information processing method according to any one of claims 22 to 43.
